(19) Europäisches Patentamt
European Patent Office
Office européen des brevets

(11) **EP 4 773 273 A1**

(12) **EUROPEAN PATENT APPLICATION**

(43) Date of publication:
**08.07.2026 Bulletin 2026/28**

(21) Application number: **25185532.6**

(22) Date of filing: **26.06.2025**

(51) International Patent Classification (IPC):
*H01M 10/04* (2006.01)     *H01M 10/0525* (2010.01)
*H01M 10/0562* (2010.01)     *H01M 10/058* (2010.01)
*H01M 50/46* (2021.01)

(52) Cooperative Patent Classification (CPC):
**H01M 10/0525; H01M 10/04; H01M 10/0562;
H01M 10/058; H01M 50/46**

(84) Designated Contracting States:
**AL AT BE BG CH CY CZ DE DK EE ES FI FR GB
GR HR HU IE IS IT LI LT LU LV MC ME MK MT NL
NO PL PT RO RS SE SI SK SM TR**
Designated Extension States:
**BA**
Designated Validation States:
**GE KH LA MA MD TN**

(30) Priority: **06.01.2025 KR 20250001529**

(71) Applicant: SAMSUNG SDI CO., LTD.
**Yongin-si, Gyeonggi-do 17084 (KR)**

(72) Inventors:
• KIM, Dongsu
  17084 Yongin-si, Gyeonggi-do (KR)
• AN, Seonhyeok
  17084 Yongin-si, Gyeonggi-do (KR)
• LEE, Donggeun
  17084 Yongin-si, Gyeonggi-do (KR)
• KIM, Hanseul
  17084 Yongin-si, Gyeonggi-do (KR)

(74) Representative: **Michalski Hüttermann & Partner
mbB
Kaistraße 16A
40221 Düsseldorf (DE)**

(54) **ALL-SOLID-STATE BATTERY AND METHOD FOR MANUFACTURING THE SAME**

(57) An all-solid-state battery according to an embodiment of the present disclosure includes a positive electrode current collector; a positive electrode active material layer on the positive electrode current collector; a solid electrolyte layer surrounding the positive electrode active material layer, the solid electrolyte layer covering a first top surface and first side surfaces of the positive electrode active material layer; a negative electrode active material layer partially surrounding the solid electrolyte layer, the negative electrode active material layer covering a second top part and second side parts of the solid electrolyte layer, wherein the solid electrolyte layer exposes at least one first exposed surface of the second side parts to the outside; and a negative electrode current collector on the negative electrode active material layer.

FIG. 11

EP 4 773 273 A1

## Description

CROSS-REFERENCE TO RELATED APPLICATION

This application claims priority to Korean Patent Application No. 10-2025-0001529 filed on January 6, 2025 in the Korean Intellectual Property Office.

BACKGROUND

The present disclosure relates to an all-solid-state battery, and to a method for producing the all-solid-state battery.

A lithium ion battery typically stores and releases energy through movement of lithium ions between a positive electrode and a negative electrode, and may constitute an energy source for various electronic devices such as, e.g., a mobile phone, a notebook computer, an electric vehicle, and the like.

As the demand for high-capacity batteries is increasing along with the advancement of electronic devices, improving the energy density of lithium ion batteries may be advantageous.

In order to address such demand, an all-solid-state battery in which a liquid electrolyte is replaced with a solid electrolyte may be advantageous. However, a solid electrolyte typically has a lower ionic conductivity than a liquid electrolyte, limiting the thickening of the positive electrode active material layer and negative electrode active material layer beyond a given level.

Therefore, in order to further increase the energy density of an all-solid-state battery, a technical solution capable of improving ion transfer between a positive electrode active material and a solid electrolyte, as well as between a negative electrode active material and the solid electrolyte, may be advantageous.

SUMMARY

An example embodiment of the present disclosure includes an all-solid-state battery capable of conducting lithium ions in multiple directions.

An example embodiment of the present disclosure includes a method for manufacturing the all-solid-state battery.

According to an example embodiment of the present disclosure, an all-solid-state battery may include a positive electrode current collector; a positive electrode active material layer on the positive electrode current collector; a solid electrolyte layer surrounding the positive electrode active material layer, the solid electrolyte layer covering a first top surface and first side surfaces of the positive electrode active material layer; a negative electrode active material layer partially surrounding the solid electrolyte layer, the negative electrode active material layer covering a second top part and second side parts of the solid electrolyte layer, wherein the solid electrolyte layer exposes at least one first exposed surface of the second side parts to the outside; and a negative electrode current collector on the negative electrode active material layer.

BRIEF DESCRIPTION OF DRAWINGS

FIGS. 1 to 3 illustrate cross-sectional views of a typical all-solid-state battery.
FIGS. 4 and 5 illustrate perspective views of an all-solid-state battery according to an example embodiment of the present disclosure.
FIGS. 6 to 10 illustrate perspective views or exploded perspective views of components of an all-solid-state battery according to an example embodiment of the present disclosure.
FIGS. 11 to 13 illustrate cross-sectional views of an all-solid-state battery according to an example embodiment of the present disclosure.
FIGS. 14 and 15 illustrate perspective views of an all-solid-state battery according to an example embodiment of the present disclosure.
FIGS. 16 to 18 illustrate diagrams of a method for manufacturing an all-solid-state battery according to an example embodiment of the present disclosure.
FIG. 19 is a flowchart illustrating a method for manufacturing an all-solid-state battery, according to an example embodiment.

## DETAILED DESCRIPTION OF EMBODIMENTS

In order to sufficiently understand the configuration and effect of the present disclosure, some example embodiments of the present disclosure are described with reference to the accompanying drawings. It should be noted, however, that the present disclosure is not limited to the following example embodiments, and may be implemented in various forms. Rather, the example embodiments are provided only to disclose the present disclosure and let those skilled in the art fully know the scope of the present disclosure.

In this description, it is understood that, when an element is referred to as being "on" another element, the element can be directly on the other element, or intervening elements may be present therebetween. In the drawings, thicknesses of some components may be exaggerated for effectively explaining the technical contents. Like reference numerals refer to like elements throughout the specification.

Some example embodiments detailed in this description are discussed with reference to sectional and/or plan views as ideal example views of the present disclosure. In the drawings, thicknesses of layers and regions may be exaggerated for effectively explaining the technical contents. Accordingly, regions illustrated in the drawings as examples have general properties, and shapes of regions illustrated in the drawings are used to disclose given shapes but not limited to the scope of the present disclosure. It is understood that, although the terms "first", "second", "third", and the like, may be used herein to describe various elements, these elements should not be limited by these terms. These terms are only used to distinguish one element from another element. The example embodiments explained and illustrated herein include complementary embodiments thereof.

The terms in this description are merely used to describe various example embodiments, but are not intended to limit the present disclosure. Unless otherwise specially noted in this description, the expression of singular form such as "a," "an," and "the" may include the expression of plural form. The terms "comprises/includes" and/or "comprising/including" used in this description do not exclude the presence or addition of one or more other components.

Unless otherwise especially defined in this description, a particle diameter may be an average particle diameter. In addition, a particle diameter indicates an average particle diameter ($D_{50}$) of particles having a cumulative volume of about 50 vol% in particle size distribution. The average particle diameter ($D_{50}$) may be measured by a method widely known to those skilled in the art, for example, by a particle size analyzer, a transmission electron microscope (TEM) image, or a scanning electron microscope (SEM) image. Alternatively, a dynamic light-scattering measurement device may be used to perform a data analysis, the number of particles is counted for each particle size range, and from counted number of particles, an average particle diameter ($D_{50}$) value may be obtained through a calculation. A laser scattering method may also be utilized to measure the average particle diameter ($D_{50}$). In the laser scattering method, a target particle is dispersed in a dispersion solvent, introduced into a laser scattering particle measurement device (e.g., MT3000 commercially available from Microtrac, Inc), irradiated with ultrasonic waves of 28 kHz at a power of 60 W, and an average particle diameter ($D_{50}$) is calculated in the 50% standard of particle diameter distribution in the measurement device.

In this description, the term "combination thereof" may refer to a mixture, a stack, a composite, a copolymer, an alloy, a blend, or a reaction product.

In this description, each of phrases as "A or B," "at least one of A and B," "at least one of A or B," "A, B, or C," "at least one of A, B, and C," and "at least one of A, B, or C," may include any one of, or all possible combinations of, the items enumerated together in a corresponding one of the phrases.

In the drawings of the present application, the "wave mark ( ~ )" may be a symbol indicating a "surface" rather than a three-dimensional shape.

When the terms "about" or "substantially" are used in this specification in connection with a numerical value, it is intended that the associated numerical value include a tolerance of $\pm 10\%$ around the stated numerical value. When ranges are specified, the range includes all values therebetween such as increments of 0.1%.

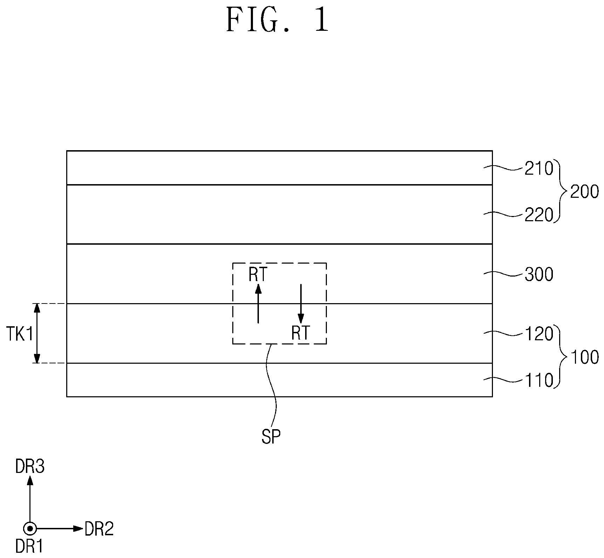

FIGS. 1 to 3 illustrate diagrams of a typical all-solid-state battery. Hereinafter, with reference to FIGS. 1 to 3, a problem that occurs when thickening is applied to a general all-solid-state battery is described.

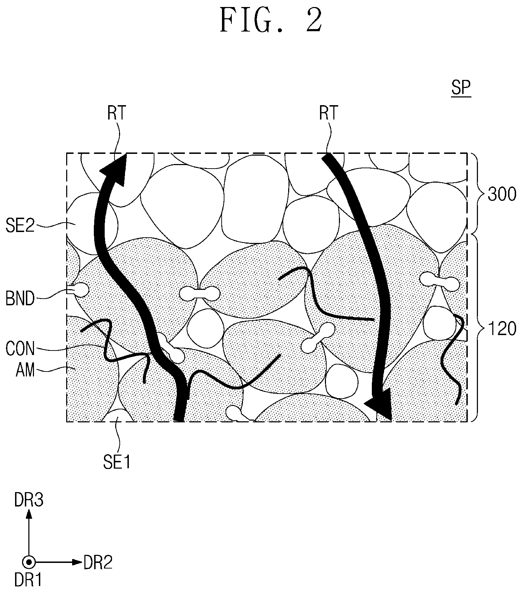

FIG. 1 illustrates a cross-sectional view of a typical all-solid-state battery, and FIG. 2 illustrates an enlarged view of region "SP" of FIG. 1. A typical all-solid-state battery may include a positive electrode layer 100, a negative electrode layer 200 facing the positive electrode layer 100 and a solid electrolyte layer 300 disposed between the positive electrode layer 100 and the negative electrode layer 200.

The positive electrode layer 100 may include a positive electrode current collector 110 and a positive electrode active material layer 120 disposed on the positive electrode current collector 110.

The positive electrode current collector 110 may provide a reference surface on which the positive electrode active material layer 120 is disposed. A typical example of the positive electrode current collector 110 may be an aluminum (Al) foil.

The positive electrode active material layer 120 may include a positive electrode active material AM, a conductive material CON, a binder BND, and a first solid electrolyte SE1.

The positive electrode active material AM may include a material that can reversibly absorb and desorb lithium ions. A typical example of the positive electrode active material AM may be a lithium transition metal oxide.

The conductive material CON may enhance ionic conductivity and electronic conductivity of the positive electrode layer 100. The conductive material CON may promote an electrochemical reaction of the positive electrode active material AM, thereby enhancing ionic conductivity. The conductive material CON may act as a movement path of electrons in the positive electrode layer 100, and thereby increase electronic conductivity. A typical example of the conductive material CON may be carbon black.

The binder BND may be configured to physically bind components in the positive electrode layer 100. When the components in the positive electrode layer 100 are not properly bonded, the ionic conductivity may rapidly decrease. A typical example of the binder BND may be polyvinylidene fluoride (PVDF).

The first solid electrolyte SE1 may smoothly transfer lithium ions from the positive electrode active material layer 120 to the solid electrolyte layer 300. When a liquid electrolyte is included, the liquid electrolyte may naturally penetrate into the positive electrode active material layer 120 and come into contact with a positive electrode active material AM. However, in the case of an all-solid-state battery where a solid electrolyte is included, it may be necessary to add the first solid electrolyte SE1 to the positive electrode active material layer 120. A typical example of the first solid electrolyte SE1 may be a sulfide-based solid electrolyte.

The solid electrolyte layer 300 may include a second solid electrolyte SE2. The second solid electrolyte SE2 may be configured to provide an ion transfer path between the positive electrode layer 100 and the negative electrode layer 200. As the second solid electrolyte SE2, the same material as the first solid electrolyte SE1 may be included, or a different material may be included.

The negative electrode layer 200 may include a negative electrode current collector 210, and a negative electrode active material layer 220 disposed on the negative electrode current collector 210.

The negative electrode current collector 210 may provide a reference surface on which the negative electrode active material layer 220 is disposed. A typical example of the negative electrode current collector 210 may be a copper (Cu) foil.

The negative electrode active material layer 220 may include a negative electrode active material and a binder.

The negative electrode active material may be a material that can reversibly absorb and desorb lithium ions. A typical example of the negative electrode active material may be a carbon-based material.

In a typical all-solid-state battery, the thickness of the positive electrode current collector 110 and the thickness of the negative electrode current collector 210 may be in a range of about 10 $\mu$m to about 20 $\mu$m, respectively. The thickness TK1 of the positive electrode active material layer 120, the thickness of the negative electrode active material layer 220, and the thickness of the solid electrolyte layer 300 may be in a range of about 10 $\mu$m to about 100 $\mu$m, respectively.

In a typical all-solid-state battery, the lithium ion conduction path RT between the positive electrode active material layer 120 and the solid electrolyte layer 300, as well as between the negative electrode active material layer 220 and the solid electrolyte layer 300, may be limited to the third direction DR3. The third direction DR3 may be a stacking direction of the positive electrode active material layer 120, the solid electrolyte layer 300, and the negative electrode active material layer 220.

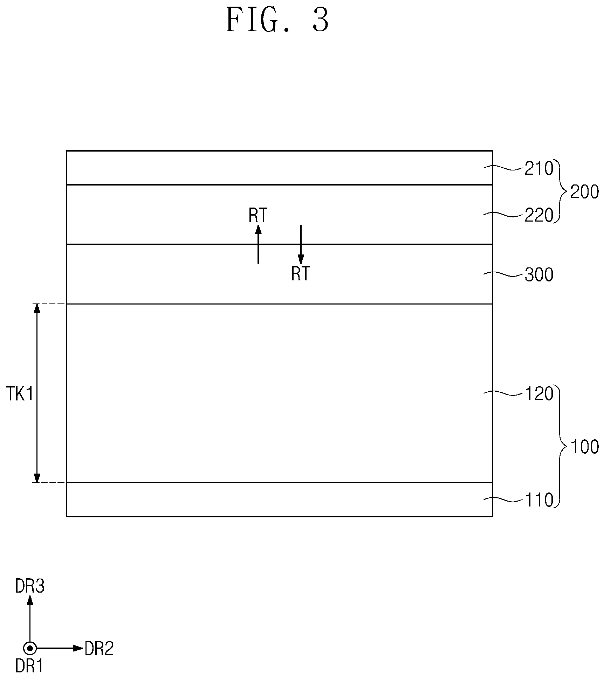

FIG. 3 illustrates an example in which thickening of the positive electrode active material layer 120 is applied to the typical all-solid-state battery of FIG. 1. Thickening may mean making the electrode active material layers 120, 220 thicker than typical thicknesses. The thickness TK1 of the positive electrode active material layer 120 to which thickening is applied may be about 100 $\mu$m or more.

In a typical battery structure where the lithium-ion conduction path RT is limited to the third direction DR3, thickening the positive electrode active material layer 120 may result in a decrease in the lithium-ion conduction rate, causing the battery resistance to increase exponentially with the increase in thickness. Therefore, there may be a limit to increasing the energy density of the battery.

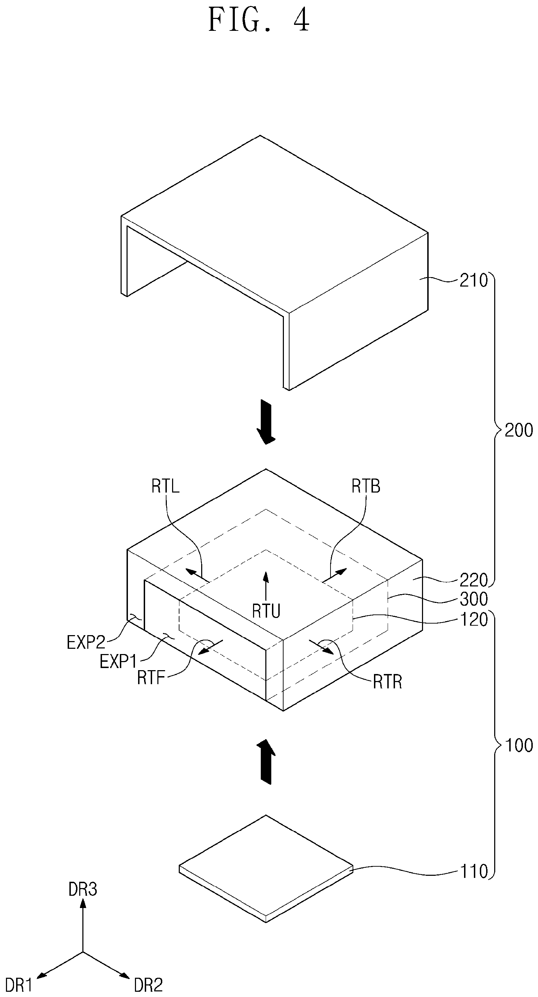

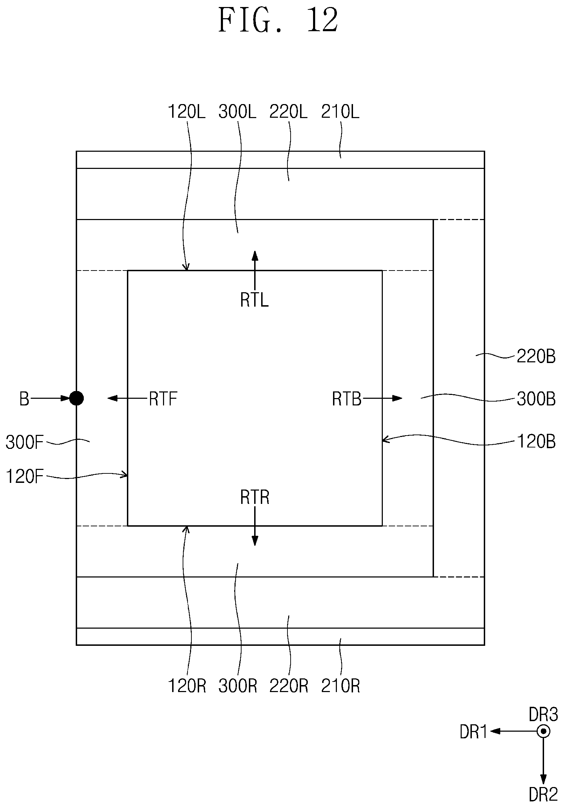

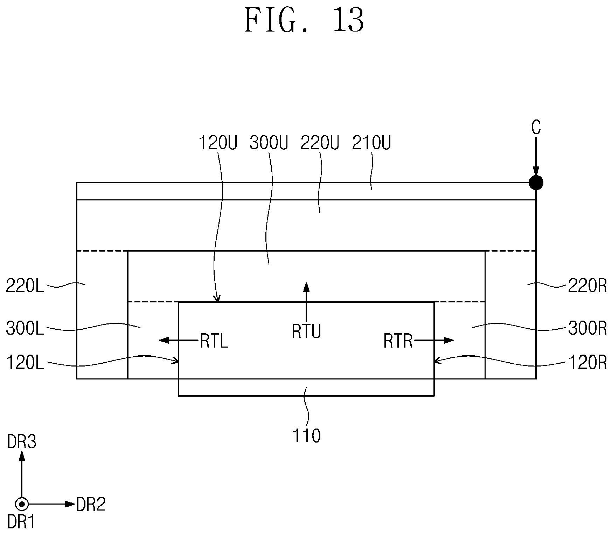

FIGS. 4 to 13 illustrate diagrams describing an all-solid-state battery 10 according to the example embodiments of the present disclosure. Hereinafter, an all-solid-state battery 10 according to example embodiments of the present disclosure is described with reference to FIGS. 4 to 13. Portions overlapping those described above with reference to FIGS. 1 to 3 are omitted, and mainly differences therefrom are described.

In FIGS. 4 to 13, the first direction DR1, the second direction DR2, and the third direction DR3 are used as unified terms. Among the normal lines of the first exposed surface EXP1 of the solid electrolyte layer 300, a normal direction toward the outside may be defined as the first direction DR1. The stacking direction of the positive electrode active material layer 120, the solid electrolyte layer 300, and the negative electrode active material layer 220 may be defined as the third direction DR3. The first direction DR1 and the third direction DR3 may be perpendicular to each other. The direction of the cross-product vector (DR3 X DR1) of the vector in the third direction DR3 and the vector in the first direction DR1 may be defined as the second direction DR2.

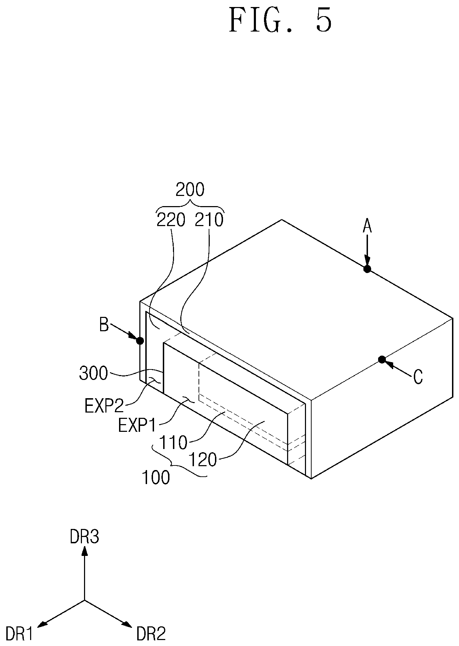

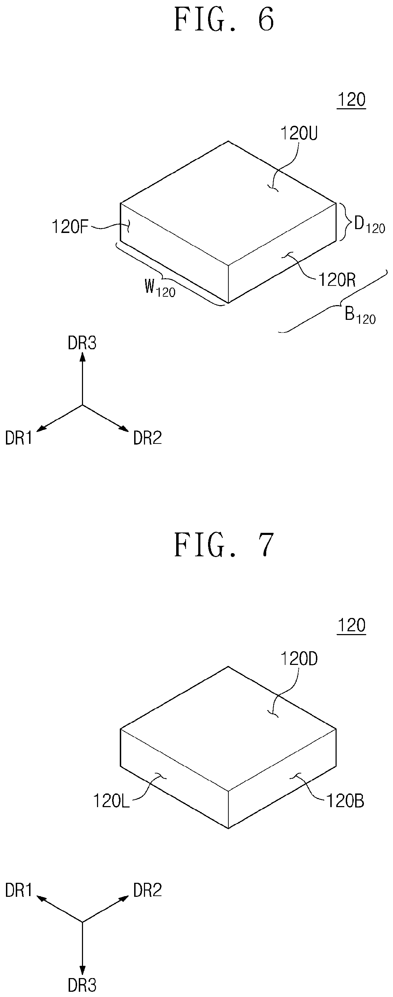

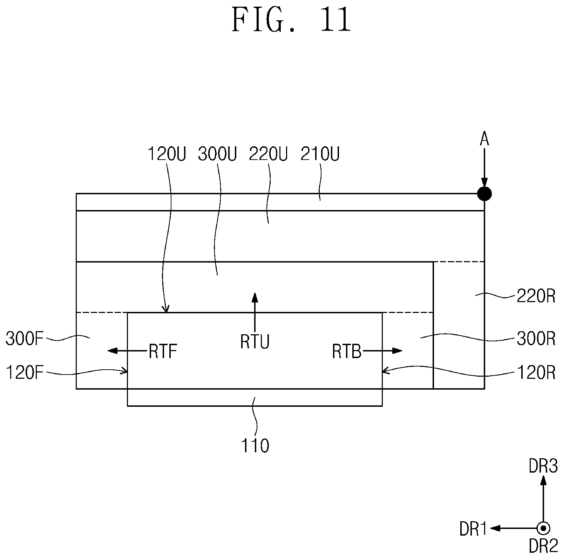

FIG. 4 illustrates a perspective view of the all-solid-state battery 10 according to an example embodiment of the present disclosure before assembling the electrode current collectors 110 and 210. FIG. 5 illustrates a perspective view after assembling. FIGS. 6 to10 illustrate perspective views or exploded perspective views of the components 120, 300, 220, 210 of FIG. 4. FIGS. 11 to 13 illustrate cross-sectional views along points A, B, and C of FIG. 5.

The all-solid-state battery 10 according to an example embodiment of the present disclosure may include a positive electrode layer 100, a solid electrolyte layer 300 surrounding and covering a positive electrode active material layer 120 of the positive electrode layer 100, and a negative electrode layer 200 partially covering the solid electrolyte layer 300.

One side surface of the solid electrolyte layer 300 may be exposed to the outside without being covered by the negative electrode layer 200. The exposed one side surface of the solid electrolyte layer 300 may be the first exposed surface EXP1. One side surface of the negative electrode active material layer 220 adjacent to the first exposed surface EXP1 may be the second exposed surface EXP2. The first exposed surface EXP1 and the second exposed surface EXP2 are surfaces in a direction in which the positive electrode tab is to be formed, and may be structured to reduce or prevent direct contact between the positive electrode tab and the negative electrode active material layer 220 to avoid a short circuit in the battery.

The all-solid-state battery 10 according to examples of the present disclosure may include a lithium ion conduction path RT expanded in multiple directions compared to the typical all-solid-state battery described above. That is, the all-solid-state battery 10 according to the present disclosure may provide ion conduction paths RT in multiple directions.

In an example embodiment, the all-solid-state battery 10 according to an example embodiment of the present disclosure may include, as ion conduction paths RT between the positive electrode active material layer 120 and the solid electrolyte layer 300, a first path 1A parallel to the first direction DR1, a second path 2A parallel to the second direction DR2, and a third path 3A parallel to the third direction DR3.

The first path 1A may include a forward path RTF and/or a backward path RTB. The second path 2A may include a first lateral path RTR and/or a second lateral path RTL. The third path 3A may include an upward path RTU.

As another example embodiment, the all-solid-state battery 10 according to an example embodiment of the present disclosure may provide, as ion conduction paths RT between the negative electrode active material layer 220 and the solid electrolyte layer 300, a first path 1B parallel to the first direction DR1, a second path 2B parallel to the second direction DR2, and a third path 3B parallel to the third direction DR3.

The first path 1B may include a backward path RTB. The second path 2B may include a first lateral path RTR and/or a second lateral path RTL. The third path 3B may include an upward path RTU.

The all-solid-state battery 10 according to the present disclosure may have a shorter lithium-ion migration distance compared to a typical all-solid-state battery having the same volume. Due to the shorter migration distance and the diverse ion conduction paths, the all-solid-state battery 10 according to the present disclosure may be suitable for a high-energy-density, high-power batteries.

Solid electrolyte tends to have a higher lithium transfer number $t_{Li+}$ compared to the liquid electrolyte. This may indicate that the solid electrolyte exhibits superior performance in selectively conducting lithium ions compared to the liquid electrolyte. The solid electrolyte can generally be classified into an oxide-based solid electrolyte, a sulfide-based solid electrolyte and a polymer-based solid electrolyte. Among them, the oxide-based solid electrolyte and the sulfide-based solid electrolyte have a lithium transfer number $t_{Li+}$ close to 1, which may indicate that ions other than lithium ions are hardly conducted.

Lithium transfer number $t_{Li+}$ refers to a ratio of the current carried by lithium ions to the total current, and may be calculated by Equation 1 below. Lithium transfer number $t_{Li+}$ may have a value between 0 and 1 ($0 \leq t_{Li+} \leq 1$). When $t_{Li+} = 1$, it may mean that 100% of the ionic current in the electrolyte is carried exclusively by lithium ions. When $t_{Li+} < 1$, it may mean that ions other than lithium ions (e.g., $P^{3-}$, $S^{2-}$, and the like) partially contribute to the overall ionic conduction.

Equation 1:

$$t_{Li+} = (\text{current carried by lithium ions/total current})$$

The lithium transfer number $t_{Li+}$ may be a concept independent of the ionic conductivity. The ionic conductivity may be a value that indicates how well all ions, including both cations and anions, are transported within the electrolyte. The lithium transfer number $t_{Li+}$ may refer to the proportion of the current carried by lithium ions in the total current.

A solid electrolyte tends to have a higher lithium transfer number $t_{Li+}$ than a liquid electrolyte, while having a relatively lower ionic conductivity. This may be because, ions in the solid electrolyte have to pass through the lattice or amorphous structure within the solid material in order to migrate, resulting in higher migration resistance and lower ionic conductivity. However, the proportion of lithium ions among the ions transferred in this process can be substantially high.

In order to effectively utilize the high lithium transfer number $t_{Li+}$ of the solid electrolyte layer 300, technical supplementation that can overcome the low ionic conductivity of the solid electrolyte must be accompanied. The all-solid-state battery 10 according to the present disclosure may complement the low ionic conductivity of the solid electrolyte through a structure that provides a multi-directional lithium ion conduction path RT. This enables the development of high-efficiency cell that selectively transports only lithium ions while maintaining high ionic conductivity.

In the all-solid-state battery 10 according to the present disclosure, even when the positive electrode active material layer 120 and/or the negative electrode active material layer 220 are designed as a thick film, it is possible to maintain desired or improved battery performance by providing an efficient movement path of lithium ions. By effectively solving the ion transfer problem caused by thickening of the electrode active material layers 120 and 220, it is possible to develop high-energy-density batteries.

FIGS. 6 and 7 are perspective views of the positive electrode active material layer 120. Referring to FIGS. 6 and 7, the positive electrode active material layer 120 according to examples of the present disclosure may be disposed on the positive electrode current collector 110. The positive electrode active material layer 120 according to examples of the present disclosure may have a three-dimensional structure having a desired or predetermined thickness in the first direction DR1, in the second direction DR2, and in the third direction DR3. A thickness in the second direction DR2 may be a first width $W_{120}$, a thickness in the first direction DR1 may be a first breadth $B_{120}$, and a thickness in the third direction DR3 may be a first depth $D_{120}$.

The positive electrode active material layer 120 according to an example embodiment of the present disclosure may have a substantially rectangular prism shape. The positive electrode active material layer 120 according to examples of the present disclosure may have various three-dimensional shapes such as, e.g., a dome shape, but may also have a substantially rectangular prism shape in consideration of structural stability of a battery and convenience of the process .

The positive electrode active material layer 120 according to an example embodiment of the present disclosure may include a first bottom surface 120D, a first top surface 120U, and first side surfaces connecting the first bottom surface 120 D and the first top surface 120 U.

The first bottom surface 120D may be a surface in contact with the positive electrode current collector 110. The first top surface 120U may be a surface opposite to the first bottom surface 120D. The first side surfaces may include a first front side surface 120F in the first direction DR1, a first back side surface 120B opposite to the first front side surface 120F, a first right side surface 120R in the second direction DR2, and a first left side surface 120L opposite to the first right side surface 120R.

The positive electrode active material layer 120 according to an example embodiment of the present disclosure may be thickened in at least one of the first direction DR1, the second direction DR2, and the third direction DR3.

When the thickness is increased in the first direction DR1, the first breadth $B_{120}$ of the positive electrode active material layer 120 may be in a range of about 100 μm to about 3000 μm, about 100 μm to about 1000 μm, or about 1000 μm to about 3000 μm. When the thickness is increased in the second direction DR2, the first width $W_{120}$ of the positive electrode active material layer 120 may be in a range of about 100 μm to about 3000 μm, about 100 μm to about 1000 μm, or about 1000 μm to about 3000 μm. When the thickness is increased in the third direction DR3, the first depth $D_{120}$ of the positive electrode active material layer 120 may be in a range of about 100 μm to about 3000 μm, about 100 μm to about 1000 μm, or about 1000 μm to about 3000 μm.

In a typical all-solid-state battery, a direction in which the positive electrode active material layer 120 is thickened may be limited to the third direction DR3 which is a stacking direction. However, in the all-solid-state battery 10 according to an example embodiment of the present disclosure, the thickness of the positive electrode active material layer 120 may be increased in various directions without being limited to the third direction DR3. This can have the advantage that the degree of freedom in battery design is increased, and thickening can be applied without being restricted by the internal space configuration of the device in which the battery is to be used.

The positive electrode active material layer 120 may include a positive electrode active material and a first solid electrolyte. The positive electrode active material layer 120 may further include a conductive material and/or a binder as needed.

The positive electrode active material of the positive electrode active material layer 120 may include a material that is configured to reversibly absorb and desorb lithium ions. The positive electrode active material may include a plurality of particles. For example, the positive electrode active material may include lithium transition metal oxide (e.g., at least one of lithium cobalt oxide (LCO), lithium nickel oxide, lithium nickel cobalt oxide, lithium nickel cobalt aluminum oxide (NCA), lithium nickel cobalt manganese oxide (NCM), lithium manganate, or lithium iron phosphate), nickel sulfide, copper sulfide, lithium sulfide, iron oxide, or vanadium oxide, but the present disclosure is not limited thereto. The positive electrode active material may be included alone or in a mixture of two or more substances.

The lithium transition metal oxide may be or include, for example, a compound represented by one of $Li_aA_{1-b}B_bD_2$ (where $0.90 \leq a \leq 1$ and $0 \leq b \leq 0.5$), $Li_aE_{1-b}B_bO_{2-c}D_c$ (where $0.90 \leq a \leq 1$, $0 \leq b \leq 0.5$, and $0 \leq c \leq 0.05$), $LiE_{2-b}B_bO_{4-c}D_c$ (where $0 \leq b \leq 0.5$ and $0 \leq c \leq 0.05$), $Li_aNi_{1-b-c}Co_bB_cD_\alpha$ (where $0.90 \leq a \leq 1$, $0 \leq b \leq 0.5$, $0 \leq c \leq 0.05$, and $0 < \alpha < 2$), $Li_aNi_{1-b-c}Co_bB_cO_{2-\alpha}F_\alpha$ (where $0.90 \leq a \leq 1$, $0 \leq b \leq 0.5$, $0 \leq c \leq 0.05$, and $0 < \alpha < 2$), $Li_aNi_{1-b-c}Mn_bB_cD_\alpha$ (where $0.90 \leq a \leq 1$, $0 \leq b \leq 0.5$, $0 \leq c \leq 0.05$,

and $0<\alpha\leq2$), $Li_aNi_{1-b-c}Mn_bB_cO_{2-\alpha}F_\alpha$ (where $0.90\leq a\leq1$, $0\leq b\leq0.5$, $0\leq c\leq0.05$, and $0<\alpha<2$), $Li_aNi_bE_cG_dO_2$ (where $0.90\leq a\leq1$, $0\leq b\leq0.9$, $0\leq c\leq0.5$, and $0.001\leq d\leq0.1$), $Li_aNi_bCo_cMn_dG_eO_2$ (where $0.90\leq a\leq1$, $0\leq b\leq0.9$, $0\leq c\leq0.5$, $0\leq d\leq0.5$, and $0.001\leq e\leq0.1$), $Li_aNiG_bO_2$ (where $0.9\leq a\leq1$ and $0.001\leq b\leq0.1$), $Li_aCoG_bO_2$ (where $0.90\leq a\leq1$ and $0.001\leq b\leq0.1$), $Li_aMnG_dO_2$ (where $0.90\leq a\leq1$ and $0.001\leq b\leq0.1$), $Li_aMn_2G_bO_4$ (where $0.90\leq a\leq1$ and $0.001\leq b\leq0.1$), $QO_2$, $QS_2$, $LiQS_2$, $V_2O_5$, $LiV_2O_5$, $LiIO_2$, $LiNiVO_4$, $Li_{3-f}J_2(PO_4)_3$ (where $0\leq f\leq2$), $Li_{3-f}Fe_2(PO_4)_3$ (where $0\leq f\leq2$), and $LiFePO_4$.

In the compounds above, "A" may be or include at least one of Ni, Co, Mn, or a combination thereof, "B" may be or include at least one of Al, Ni, Co, Mn, Cr, Fe, Mg, Sr, V, a rare-earth element, or a combination thereof, "D" may be or include at least one of O, F, S, P, or a combination thereof, "E" may be or include at least one of Co, Mn, or a combination thereof, "F" may be or include at least one of F, S, P, or a combination thereof, "G" may be or include at least one of Al, Cr, Mn, Fe, Mg, La, Ce, Sr, V, or a combination thereof, "Q" may be or include at least one of Ti, Mo, Mn, or a combination thereof, "I" may be or include at least one of Cr, V, Fe, Sc, Y, or a combination thereof, and "J" may be or include at least one of V, Cr, Mn, Co, Ni, Cu, or a combination thereof.

The positive electrode active material may include, for example, a lithium salt of transition metal oxide having a layered rock salt type structure among the lithium transition metal oxides discussed above. The term "layered rock salt type structure" may refer to a structure in which an oxygen atom layer and a metal atom layer are alternately and regularly arranged in a <111> direction of a cubic rock salt type structure, where each atom layer forms a two-dimensional plane. The term "cubic rock salt type structure" may refer to a sodium chloride (NaCl) type structure, which is a type of crystal structure, and for example, has a structure in which face centered cubic lattices (FCCs) each formed of cations and anions are arranged displaced from each other by 1/2 of a ridge of a unit lattice. The lithium transition metal oxide having the layered rock salt type structure may be or include a ternary lithium transition metal oxide, such as $LiNi_xCo_yAl_zO_2$ (NCA) or $LiNi_xCo_yMn_zO_2$ (NCM) (where $0<x<1, 0<y<1, 0<z<1$, and $x+y+z=1$). When the positive electrode active material includes a ternary lithium transition metal oxide having the layered rock salt type structure, the all-solid state battery 10 may have increased energy density and improved thermal stability.

When a ternary lithium transition metal oxide containing nickel (Ni) (e.g., NCA, NCM, or the like) is included as the positive electrode active material, the capacity density of the all-solid-state battery 10 can be increased, and the phenomenon of metal elution from the positive electrode active material during charging and discharging process can be reduced. As a result, the cycle characteristics of the all-solid-state battery 10 can be improved.

On the other hand, the "cycle characteristic" is an index that indicates the degree of deterioration of the all-solid-state battery 10 due to charging and discharging. When the cycle characteristic is desired or improved, the deterioration due to charging and discharging is reduced or minimal, and the performance can be maintained stably over a long period of time. On the other hand, when the cycle characteristic is poor, deterioration may progress rapidly in the charging and discharging process, resulting in a significant decline in performance.

The particle shape of the positive electrode active material may vary. In one example embodiment, the positive electrode active material may consist of, or include, amorphous particles. In another example embodiment, the positive electrode active material may include single-crystal particles in spherical or elliptical shapes. In yet another example embodiment, the positive electrode active material may include polycrystalline particles. The polycrystalline particles may be or include secondary particles composed of or including multiple primary particles. Polycrystalline particles may refer to secondary particles in which the primary particles are structurally and systematically aggregated to form independent spherical or elliptical shapes. This may be distinguished from random attachment among primary particles.

The first solid electrolyte may have a particle shape. The first solid electrolyte may be dispersed between the positive electrode active material particles. The first solid electrolyte may including at least one of an oxide-based, polymer-based, sulfide-based solid electrolyte, or a combination thereof. For example, the first solid electrolyte may include a sulfide-based solid electrolyte with desired or improved lithium ion conductivity properties.

The sulfide-based solid electrolyte includes at least one of Li, S, and P, and may optionally further include a halogen element. The sulfide-based solid electrolyte may include, for example, at least one or more of $Li_3PO_4$-$Li_2SO_4$, $Li_2S$-$P_2S_5$, $Li_2S$-$P_2S_5$-LiX (where X is a halogen element), $Li_2S$-$P_2S_5$-$Li_2O$, $Li_2S$-$P_2S_5$-$Li_2O$-LiI, $Li_2S$-$SiS_2$, $Li_2S$-$SiS_2$-LiI, $Li_2S$-$SiS_2$-LiBr, $Li_2S$-$SiS_2$-LiCl, $Li_2S$-$SiS_2$-$B_2S_3$-LiI, $Li_2S$-$SiS_2$-$P_2S_5$-LiI, $Li_2S$-$B_2S_3$, $Li_2S$-$P_2S_5$-$Z_mS_n$ (where m, n is independently a positive number, and Z is or includes at least one of Ge, Zn, or Ga), $Li_2S$-$GeS_2$, $Li_2S$-$SiS_2$-$Li_3PO_4$, $Li_2S$-$SiS_2$-$Li_pNO_q$ (where p, q is independently a positive number, and N is or includes at least one of P, Si, Ge, B, Al, Ga In), and $Li_{7-a-c}M_aPS_{6-c}X_c$ (where $0\leq a\leq2$, $0\leq c\leq2$, M is or includes at least one of a plurality of transition metals, and X is or includes at least one of Cl, Br, I, or a combination thereof).

The sulfide-based solid electrolyte may have relatively high ionic conductivity. For example, the ionic conductivity of the sulfide-based solid electrolyte may be in a range of about $1\times10^{-5}$ S/cm or more, about $1.5\times10^{-5}$ S/cm or more, about $2\times10^{-5}$ S/cm or more, about $4\times10^{-5}$ S/cm or more, about $6\times10^{-5}$ S/cm or more, about $8\times10^{-5}$ S/cm or more, or about $1\times10^{-4}$ S/cm or more at room temperature.

The sulfide-based solid electrolyte may include, for example, an argyrodite-type compound including $Li_{7-a}M_aPS_{6-c}X_c$ (where $0\leq a\leq2$ and $0\leq c\leq2$). In the chemical formula above, M may be or include at least one of a plurality of transition metals, and X may be or include at least one of F, Br, Cl, I or a combination thereof. For example, the sulfide-based solid electrolyte may be or include an argyrodite-type compound including at least one of $Li_6PS_5Cl$, $Li_6PS_5Br$, and $Li_6PS_5I$. The argyrodite-type solid electrolyte may have a density in a range of about 1.5 g/cc to about 2.0 g/cc. As the argyrodite-type solid electrolyte has a density that is equal to or greater than about 1.5 g/cc, it may be possible to decrease an internal resistance of an all-solid-state battery, and to hinder or prevent a solid electrolyte layer from experiencing short-circuit and penetration caused by the formation of lithium dendrites. The solid electrolyte may have an elastic modulus in a range of, for example, about 15 GPa to about 35 GPa, or about 15 GPa to about 30 GPa.

The oxide-based solid electrolyte includes at least one of Li, O, and a transition metal element, and may optionally further include other elements. The oxide-based solid electrolyte may be or include, for example, at least one of LLZO (Lithium Lanthanum Zirconium Oxide), LATP (Lithium Aluminum Titanium Phosphate), LAGP (Lithium aluminum Germanium Phosphate) LLTO (Lithium Lanthanum Titanium Oxide), a Perovskite structure oxide, a NASICON structure oxide, or the like.

The polymer-based solid electrolyte may be or include an electrolyte including a polymer having an ion-conductive functional group.

Examples of the polymer contained in the polymer solid electrolyte include at least one of polyethylene oxide (PEO), polyvinylidene fluoride (PVDF), vinylidene fluoridehexafluoropropylene (PVDF-HFP), polyethylene oxide (PEO), poly(styrene-b-ethylene oxide) block copolymer (PS-PEO), poly(styrene-butadiene), poly(styrene-isoprene-styrene), poly(styrene-b-divinylbenzene) block copolymer, poly(styrene-ethyleneoxide-styrene) block copolymer, polystyrene sulfonate (PSS), polyvinylfluoride (PVF), poly(methyl methacrylate) (PMMA), polyethylene glycol (PEG), polyacrylonitrile (PAN), polytetrafluoroethylene (PTFE), polyethylene dioxythiophene (PEDOT), polypyrrole (PPY), polyaniline, polyacetylene, Nafion, Aquivion, Flemion, Gore, Aciplex, Morgane ADP, sulfonated poly(ether ether ketone) (SPEEK), sulfonated poly(arylene ether ketone ketone sulfone) (SPAEKKS), sulfonated poly(aryl ether ketone) (SPAEK), poly[bis (benzimidazobenzisoquinolinones)] (SPBIBI), and lithium 9,10-diphenylanthracene-2-sulfonate DPASLi$^+$. However, the present disclosure is not limited thereto, and any material included as a polymer solid electrolyte in the relevant technical field may be applicable.

The first solid electrolyte in the positive electrode active material layer 120 may have a median particle size (D50) that is equal to or smaller than the median particle size of the second solid electrolyte in the solid electrolyte layer 300.

When the median particle size (D50) of the solid electrolytes in the two layers is the same or substantially the same, there is an advantage in that the manufacturing process can be simplified and the production efficiency can be increased.

When the first solid electrolyte in the positive electrode active material layer 120 has a median particle size (D50) that is smaller than the median particle size of the second solid electrolyte in the solid electrolyte layer 300, uniform mixing becomes possible, and the contact area with the solid electrolyte increases, which has the effect of improving ion transfer characteristics. The median particle size (D50) of the first solid electrolyte in the positive electrode active material layer 120 may be equal to, for example, about 90% or less, about 80% or less, about 70% or less, about 60% or less, about 50% or less, about 40% or less, about 30% or less, or about 20% or less of the median particle size (D50) of the second solid electrolyte in the solid electrolyte layer 300. Meanwhile, the median particle size (D50) may refer to the median diameter measured using, e.g., a laser particle size analyzer.

The positive electrode active material layer 120 may include a conductive material. The conductive material may increase the conductivity of the positive electrode active material and the first solid electrolyte. The conductive material may have conductivity without causing a chemical change of the all-solid-state battery 10 to increase conductivity of the positive electrode active material and the solid electrolyte. The conductive material may include a carbon-based material. The conductive material may include, for example, one or more of graphite, carbon black, acetylene black, carbon nanofiber, and carbon nanotube.

The positive electrode active material layer 120 may further include a binder. The binder may combine the positive electrode active material, the solid electrolyte, and the conductive material together in the positive electrode active material layer 120. The binder may include a material that is configured to improve the adhesion between the positive electrode active material layer 120 and the positive electrode current collector 110. For example, the binder may include at least one of polyvinylidenefluoride, styrene-butadiene rubber (SBR), polytetrafluoroethylene, polyvinylidenefluoride, vinylidenefluoride/hexafluoropropylene copolymer, polyacrylonitrile, and polymethylmethacrylate.

The amount of the positive electrode active material may be in a range of about 50 wt % to about 97 wt % based on the total weight of the positive electrode active material layer 120. The amount of the first solid electrolyte may be in a range of about 10 wt % to about 50 wt % based on the total weight of the positive electrode active material layer 120. The amount of the binder may be in a range of about 0.1 wt % to about 10 wt % based on the total weight of the positive electrode active material layer 120. When the amount of the binder is too high or excessive, there may be an increase in the internal resistance of the battery. The amount of the conductive material may be in a range of about 0.1 wt % to about 10 wt % based on the total weight of the positive electrode active material layer 120. When the amount of the conductive material is too small, the electrical conductivity of the positive electrode active material layer 120 may be lowered.

The positive electrode active material layer 120 may further include an additive, such as or including at least one of a filler, a coating agent, a dispersant, and an ionic conductivity agent, in addition to the positive electrode active material, the first solid electrolyte, the conductive material, and the binder described above.

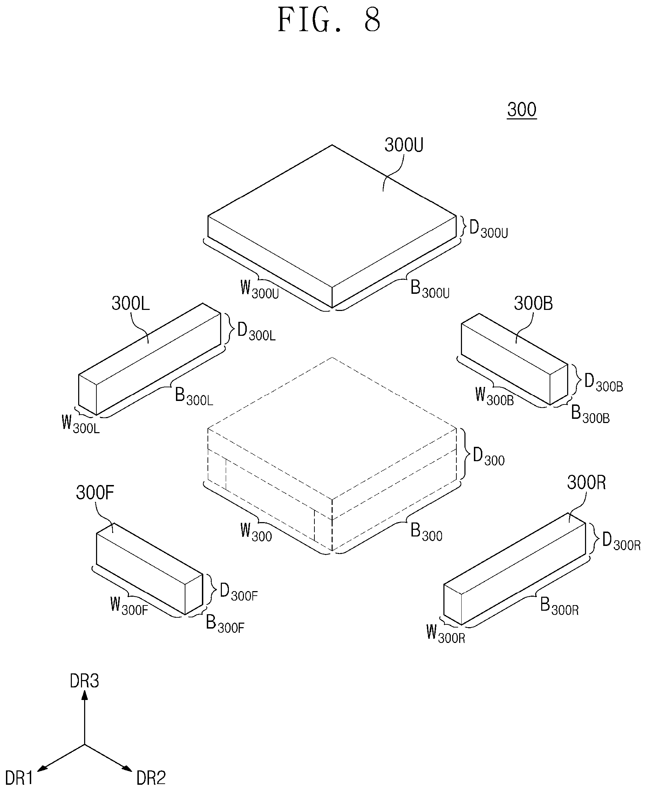

FIG. 8 is an exploded perspective view of the solid electrolyte layer 300.

Referring to FIG. 8, the solid electrolyte layer 300 according to examples of the present disclosure may be formed to surround and cover the positive electrode active material layer 120. For example, the solid electrolyte layer 300 may cover the first top surface 120U and the first side surfaces 120F, 120R, 120B, and 120L of the positive electrode active material layer 120. As illustrated in FIGS. 6 and 7, the first top surface 120U and the first side surfaces 120F, 120R, 120B, and 120L of the positive electrode active material layer 120 may be completely, or substantially completely, covered by the solid electrolyte layer 300 and thus may be invisible from the outside. The solid electrolyte layer 300 may be formed in contact, e.g., in close contact, with the positive electrode active material layer 120 to reduce or prevent any voids from occurring at the interface.

The solid electrolyte layer 300 according to an example embodiment of the present disclosure may have a substantially rectangular prism shape containing a first cavity therein. The first cavity may have a shape and size that are substantially identical to (or correspond to) the shape and size of the positive electrode active material layer 120.

One of the side surfaces of the solid electrolyte layer 300 according to examples of the present disclosure may be the first exposed surface EXP1 illustrated in FIG. 5, which is exposed to the outside.

The positive electrode active material layer 120 and the solid electrolyte layer 300 may form a first stack STK1. The first stack STK1 according to an embodiment of the present disclosure may have a substantially rectangular prism shape. The first stack STK1 according to the present disclosure may have various three-dimensional shapes such as, e.g., a dome shape, but may have a substantially rectangular prism shape in consideration of structural stability of the battery and convenience of the process.

The first stack STK1 according to an example embodiment of the present disclosure may have a second width $W_{300}$, which is the thickness in the second direction DR2, a second breadth $B_{300}$, which is the thickness in the first direction DR1, and a second depth $D_{300}$, which is the thickness in the third direction DR3.

The solid electrolyte layer 300 according to an example embodiment of the present disclosure may include a second top part 300U and second side parts. The second side parts may include a second front side part 300F, a second right side part 300R, a second back side part 300B, and a second left side part 300L. The parts of the solid electrolyte layer 300 are merely for convenience of description, and the actual solid electrolyte layer 300 may have a three-dimensional structure in which, e.g., all parts are continuously connected.

The second top part 300U may be a part of the solid electrolyte layer 300 which covers the first top surface 120U of the positive electrode active material layer 120. The second top part 300U may have a second top width $W_{300U}$ which is the thickness in the second direction DR2, a second top breadth $B_{300U}$ which is the thickness in the first direction DR1, and a second top depth $D_{300U}$ which is the thickness in the third direction DR3.

The second top width $W_{300U}$ of the second top part 300U may be greater than the first width $W_{120}$ of the positive electrode active material layer 120, and the second top breadth $B_{300U}$ of the second top part 300U may be greater than the first breadth $B_{120}$ of the positive active material layer 120.

The second front side part 300F may be a part of the solid electrolyte layer 300, which covers the first front side surface 120F of the positive electrode active material layer 120. The second front side part 300F may include the first exposed surface EXP1 exposed to the outside (see FIG. 4). The second front side part 300F may have a second front side width $W_{300F}$, which is the thickness in the second direction DR2, a second front side breadth $B_{300F}$, which is the thickness in the first direction DR1, and a second front side depth $D_{300F}$, which is the thickness in the third direction DR3.

The second front side width $W_{300F}$ of the second front side part 300F may be substantially the same as the first width $W_{120}$ of the positive electrode active material layer 120, and the second front side depth $D_{300F}$ of the second front side part 300F may be substantially the same as the first depth $D_{120}$ of the positive electrode active material layer 120.

The second right side part 300R may be a part of the solid electrolyte layer 300 which covers the first right side surface 120R of the positive electrode active material layer 120. The second right side part 300R may have a second right side width $W_{300R}$, which is the thickness in the second direction DR2, a second right side breadth $B_{300R}$, which is the thickness in the first direction DR1, and a second right side depth $D_{300R}$, which is the thickness in the third direction DR3.

The second right side breadth $B_{300R}$ of the second right side part 300R may be substantially the same as the first breadth $B_{120}$ of the positive electrode active material layer 120, and the second right side depth $D_{300R}$ of the second right side part 300R may be substantially the same as the first depth $D_{120}$ of the positive electrode active material layer 120.

The second back side part 300B may be a part of the solid electrolyte layer 300 which covers the first back side surface 120B of the positive electrode active material layer 120. The second back side part 300B may have a second back side width $W_{300B}$, which is the thickness in the second direction DR2, a second back side breath $B_{300B}$, which is the thickness in the first direction DR1, and a second back side depth $D_{300B}$, which is the thickness in the third direction DR3.

The second back side width $W_{300B}$ of the second back side part 300B may be substantially the same as the first width $W_{120}$ of the positive electrode active material layer 120, and the second back side depth $D_{300B}$ of the second back side part 300B may be substantially the same as the first depth $D_{120}$ of the positive electrode active material layer 120.

The second left side part 300L may be a part of the solid electrolyte layer 300 which covers the first left side surface 120L of the positive electrode active material layer 120. The second left side part 300L may have a second left side width $W_{300L}$, which is the thickness in the second direction DR2, a second left side breadth $B_{300L}$, which is the thickness in the first direction DR1, and a second left side depth $D_{300L}$, which is the thickness in the third direction DR3.

The second left side breadth $B_{300L}$ of the second left side part 300L may be substantially the same as the first breadth $B_{120}$ of the positive electrode active material layer 120, and the second left side depth $D_{300L}$ of the second left side part 300L may be substantially the same as the first depth $D_{120}$ of the positive electrode active material layer 120.

The solid electrolyte layer 300 according to an example embodiment of the present disclosure may be configured to independently adjust the thicknesses in the first direction DR1, the second direction DR2, and the third direction DR3.

The thickness of the solid electrolyte layer 300 in the first direction DR1 may be adjusted through the second front side breadth $B_{300F}$ of the second front side part 300F and/or the second back side breadth $B_{300B}$ of the second back side part 300B. The second front side breadth $B_{300F}$ may be in a range of about 10 μm to about 200 μm. The second back side breadth $B_{300B}$ may be in a range of about 10 μm to about 200 μm.

The thickness of the solid electrolyte layer 300 in the second direction DR2 may be adjusted through the second right side width $W_{300R}$ of the second right side part 300R and/or the second left side width $W_{300L}$ of the second left side part 300L. The second right side width $W_{300R}$ may be in a range of about 10 μm to about 200 μm. The second left side width $W_{300L}$ may be in a range of about 10 μm to about 200 μm.

The thickness of the solid electrolyte layer 300 in the third direction DR3 may be adjusted through the second top depth $D_{300U}$ of the second top part 300U. The second top depth $D_{300U}$ may be in a range of about 10 μm to about 200 μm.

The all-solid-state battery 10 according to an example embodiment of the present disclosure may have a relatively small proportion of the solid electrolyte layer 300 within the battery 10. This may be due to the relative decrease in the proportion of the solid electrolyte layer 300 as the positive electrode active material layer 120 and/or the negative electrode active material layer 220 undergo a film thickening process and become thicker.

For example, "the ratio of the second top depth $D_{300U}$ of the solid electrolyte layer 300 to the first depth $D_{120}$ of the positive electrode active material layer 120 ($D_{300U}/D_{120}$)" may be in a range of about 2% to about 50%, about 2% to about 40%, about 2% to about 30%, or about 2% to about 20%.

For example, "the ratio of the second top depth $D_{300U}$ of the solid electrolyte layer 300 to the third top depth $D_{220U}$ of the negative electrode active material layer 220 ($D_{300U}/D_{220U}$)" may be in a range of about 5% to about 50%, about 5% to about 40%, about 5% to about 30%, or about 5% to about 20%.

The thickness of the solid electrolyte layer 300 in each direction may be adjusted in accordance with the thickening direction of the positive electrode active material layer 120 and the negative electrode active material layer 220. For example, when thickening in the third direction DR3 is applied to the positive electrode active material layer 120, the ion transfer path can be shortened by thinning the second top depth $D_{300U}$ of the solid electrolyte layer 300.

The thickness of the solid electrolyte layer 300 in each direction may be adjusted in accordance with not only the thickening direction of the electrode active material layer, but also the internal space configuration of the device in which the battery is to be included. For example, when the internal space of the device is limited or space utilization in a specific direction is desired, the overall volume of the battery can be improved or optimized by reducing the thickness of the solid electrolyte layer 300 in such direction.

The solid electrolyte layer 300 may include a second solid electrolyte. The second solid electrolyte may include at least one of an oxide-based, polymer-based, sulfide-based solid electrolyte, or a combination thereof. For example, the second solid electrolyte may include a sulfide-based solid electrolyte having desired or improved lithium ion conductivity property.

The second solid electrolyte in the solid electrolyte layer 300 may be the same as or different from the first solid electrolyte in the positive electrode active material layer 120.

Detailed descriptions of the oxide-based, polymer-based, and sulfide-based solid electrolytes are the same as the above descriptions for the positive electrode active material layer 120.

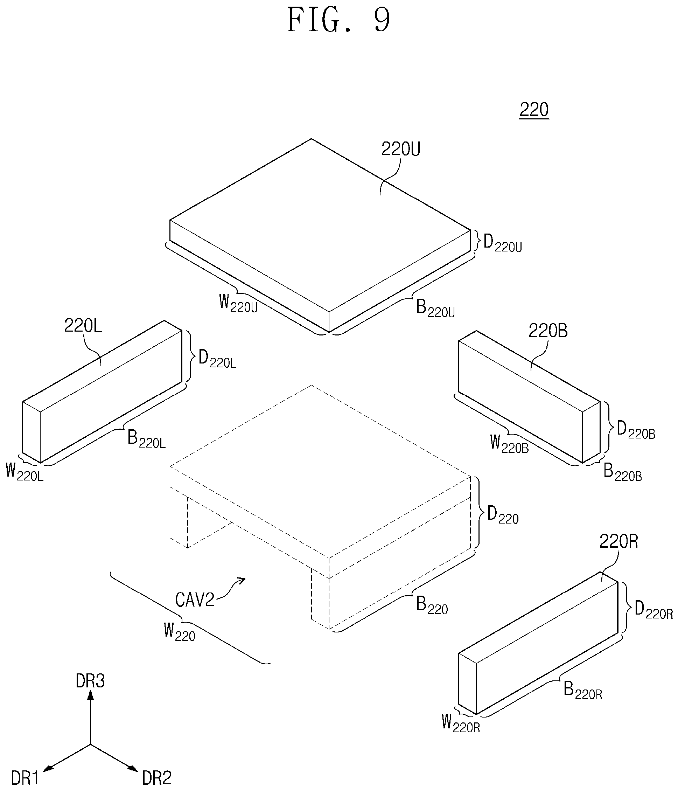

FIG. 9 is an exploded perspective view of the negative electrode active material layer 220.

Referring to FIG. 9, the negative electrode active material layer 220 according to examples of the present disclosure may partially cover the solid electrolyte layer 300. For example, the negative electrode active material layer 220 may cover the second top part 300U of the solid electrolyte layer 300, and may cover the second side parts except for one of the second side parts. As shown in FIG. 5, the second top part 300U of the solid electrolyte layer 300 and three of the second side parts 300R, 300B, and 300L may be completely, or substantially completely, covered, making them substantially not visible from the outside. The negative electrode active material layer 220 may be formed in contact, e.g., in close contact, with the solid electrolyte layer 300 to reduce or prevent any voids from occurring at the boundary between them.

The negative electrode active material layer 220 may include a second cavity CAV2. The second cavity CAV2 may have an open shape having a passage connected to the outside. The second cavity CAV2 may have a shape and size that are substantially identical to the shape and size of the solid electrolyte layer 300.

Through the passage opened to the outside of the second cavity CAV2, one side of the solid electrolyte layer 300 may be exposed. The externally exposed surface of the solid electrolyte layer 300 may be defined as a first exposed surface EXP1 illustrated in FIG. 5. A side surface of the negative electrode active material layer 220 adjacent to the first exposed surface EXP1 may be defined as a second exposed surface EXP2.

The direction DR1 in which the first exposed surface EXP1 and the second exposed surface EXP2 face may be a direction in which the positive electrode tab is formed. The first exposed surface EXP1 and the second exposed surface EXP2 may reduce or prevent a short circuit in the battery by reducing or preventing contact between the positive electrode tab and the negative electrode active material layer 220.

The positive electrode active material layer 120, the solid electrolyte layer 300, and the negative electrode active material layer 220 may form a second stack STK2. The second stack STK2 according to an example embodiment of the present disclosure may have a substantially rectangular prism shape. The second stack STK2 according to examples of the present disclosure may have various three-dimensional shapes such as, e.g., a dome shape, but may also have a substantially rectangular prism shape in consideration of structural stability of the battery and convenience of the process.

The second stack STK2 according to an example embodiment of the present disclosure may have a third width $W_{220}$, which is the thickness in the second direction DR2, a third breadth $B_{220}$, which is the thickness in the first direction DR1, and a third depth $D_{220}$, which is the thickness in the third direction DR3.

The negative electrode active material layer 220 according to an example embodiment of the present disclosure may include a third top part 220U and third side parts. The third side parts may include a third right side part 220R, a third back side part 220B, and a third left side part 220L. The parts of the negative electrode active material layer 220 are merely for convenience of description, and the actual negative electrode active material layer 220 may have a three-dimensional structure in which all parts are continuously connected.

The third top part 220U may be a part of the negative electrode active material layer 220 covering the second top part 300U of the solid electrolyte layer 300. The third top part 220U may have a third top width $W_{220U}$, which is the thickness in the second direction DR2, a third top breadth $B_{220U}$, which is the thickness in the first direction DR1, and a third top depth $D_{220U}$, which is the thickness in the third direction DR3.

A third top width $W_{220U}$ of the third top part 220U may be greater than the second width $W_{300}$ of the first stack STK1, and a third top breadth $B_{220U}$ of the third top part 220 U may be greater than the second breadth $B_{300}$ of the first stack STK1.

The third right side part 220R may be a part of the negative electrode active material layer 220 covering the second right side part 300R of the solid electrolyte layer 300. The third right side part 220R may have a third right side width $W_{220R}$, which is the thickness in the second direction DR2, a third right side breadth $B_{220R}$, which is the thickness in the first direction DR1, and a third right side depth $D_{220R}$, which is the thickness in the third direction DR3.

The third right side breadth $B_{220R}$ of the third right side part 220R may be substantially the same as the second breadth $B_{300}$ of the first stack STK1, and the third right side depth $D_{220R}$ of the third right side part 220R may be substantially the same as the second depth $D_{300}$ of the first stack STK1.

The third back side part 220B may be a part of the negative electrode active material layer 220 covering the second back side part 300B of the solid electrolyte layer 300. The third back side part 220B may have a third back side width $W_{220B}$, which is the thickness in the second direction DR2, a third back side breadth $B_{220B}$, which is the thickness in the first direction DR1, and a third back side depth $D_{220B}$, which is the thickness in the third direction DR3.

The third back side width $W_{220B}$ of the third back side part 220B may be substantially the same as the second width $W_{300}$ of the first stack STK1, and the third back side depth $D_{220B}$ of the third back side part 220B may be substantially the same as the second depth $D_{300}$ of the first stack STK1.

The third left side part 220L may be a part of the negative electrode active material layer 220 covering the second left side part 300L of the solid electrolyte layer 300. The third left side part 220L may have a third left side width $W_{220L}$, which is the thickness in the second direction DR2, a third left side breadth $B_{220L}$, which is the thickness in the first direction DR1, and a third left side depth, $D_{220L}$ which is the thickness in the third direction DR3.

The third left side breadth $B_{220L}$ of the third left side part 220L may be substantially the same as the second breadth $B_{300}$ of the first stack STK1, and the third left side depth $D_{220L}$ of the third left side part 220L may be substantially the same as the second depth $D_{300}$ of the first stack STK1.

The negative electrode active material layer 220 according to an example embodiment of the present disclosure may be thickened in at least one of the first direction DR1, the second direction DR2, and the third direction DR3.

The thickness of the negative electrode active material layer 220 in the first direction DR1 may be adjusted through the third back side breadth $B_{220B}$ of the third back side part 220B. The thickened third back side breadth $B_{220B}$ may be in a range of about 100 $\mu$m to about 5000 $\mu$m, about 100 $\mu$m to about 1000 $\mu$m, or about 1000 $\mu$m to about 5 000 $\mu$m.

The thickness of the negative electrode active material layer 220 in the second direction DR2 may be adjusted by the third right side width $W_{220R}$ of the third right side part 220R and/or the third left side width $W_{220L}$ of the third left side part 220L. The thickened third right side width $W_{220R}$ may be in a range of about 100 $\mu$m to about 5000 $\mu$m, about 100 $\mu$m to about 1000 $\mu$m, or about 1000 $\mu$m to about 5000 $\mu$m. The thickened third left side width $W_{220L}$ may be in a range of about

100 $\mu$m to about 5000 $\mu$m, about 100 $\mu$m to about 1000 $\mu$m, or about 1000 $\mu$m to about 5000 $\mu$m.

The thickness of the negative electrode active material layer 220 in the third direction DR3 may be adjusted through the third top depth $D_{220U}$ of the third top part 220U. The thickened third top depth $D_{220U}$ may be in a range of about 100 $\mu$m to about 5000 $\mu$m, about 100 $\mu$m to about 1000 $\mu$m, or about 1000 $\mu$m to about 5 000 $\mu$m.

In a typical all-solid-state battery, a direction in which the negative electrode active material layer 220 is thickened may be limited to the third direction DR3, which is a stacking direction. However, in the all-solid-state battery 10 according to an example embodiment of the present disclosure, the thickness of the negative electrode active material layer 220 may be increased in various directions without being limited to the third direction DR3. This can have the advantage that the degree of freedom in battery design is increased, and thickening can be applied without being restricted by the internal space configuration of the device in which the battery is to be included.

The negative electrode active material layer 220 may include a negative electrode active material and a binder.

The negative electrode active material may have a particulate form. The median particle size (D50) of the particulate negative electrode active material may be, for example, in a range of about 4 $\mu$m or less, about 2 $\mu$m or less, about 1 $\mu$m or less, or about 900 nm or less. The median particle size (D50) of the negative electrode active material may also be, for example, in the range of about 10 nm to 4 about $\mu$m, about 10 nm to about 2 $\mu$m, or about 10 nm to about 900 nm. By having a median particle size (D50) within these ranges, the reversible absorption and/or desorption of lithium during charging and discharging may be facilitated. Meanwhile, the median particle size (D50) may refer to the median diameter measured using a laser particle size analyzer.

The negative electrode active material may include, for example, one or more of a carbon-based negative electrode active material and metal or metalloid negative electrode active material.

The carbon-based negative electrode active material may in particular be or include amorphous carbon. Amorphous carbon may be or include, for example, but is not necessarily limited to, at least one of carbon black (CB), acetylene black (AB), furnace black (FB), ketjen black (KB), graphene, and the like. Amorphous carbon is distinguished from crystalline carbon or graphite-based carbon as amorphous carbon has no crystallinity or substantially low crystallinity.

The metal or metalloid negative electrode active material includes at least one or more of gold (Au), platinum (Pt), palladium (Pd), silicon (Si), silver (Ag), aluminum (Al), bismuth (Bi), tin (Sn), and zinc (Zn), but is not necessarily limited thereto. The metal or metalloid negative electrode active material may be or include a metal or metalloid negative electrode active material that forms an alloy or compound with lithium. Meanwhile, since nickel (Ni) does not form an alloy with lithium and thus does not correspond to a metal negative electrode active material.

The negative electrode active material layer 220 includes one kind of negative electrode active material among the above negative electrode active materials, or includes a mixture of a plurality of different negative electrode active materials. For example, the negative electrode active material layer 220 may include only amorphous carbon, or may include at least one or more of gold (Au), platinum (Pt), palladium (Pd), silicon (Si), silver (Ag), aluminum (Al), bismuth (Bi), tin (Sn), and zinc (Zn).

In an example embodiment, the negative electrode active material layer 220 may include a mixture of amorphous carbon and at least one or more of gold (Au), platinum (Pt), palladium (Pd), silicon (Si), silver (Ag), aluminum (Al), bismuth (Bi), tin (Sn), and zinc (Zn). The mixing ratio of the mixture of amorphous carbon and gold (Au) or the like may be, for example, in a range of about 10:1 to about 1:2, about 5:1 to about 1:1, or about 4:1 to about 2:1 as a weight ratio, but is not necessarily limited to the above range and may be determined according to characteristics of the all-solid-state battery 10. When the negative electrode active material has such a composition, the cycle characteristics of the all-solid-state battery 10 can be further improved.

The binder may assist in bonding between materials in the negative electrode active material layer 220, or bonding between the negative electrode active materials layer 220 and the negative electrode current collector 210. Examples of the binder contained in the negative electrode active material layer 220 include, but are not necessarily limited to, at least one of styrene-butadiene rubber (SBR), polytetrafluoroethylene, polyvinylidene fluoride, polyethylene, vinylidene fluoride/hexafluoropropylene copolymer, polyacrylonitrile, and polymethyl methacrylate. The binder may include a single binder or a plurality of different binders.

The negative electrode active material layer 220 may further include other additives in addition to the negative electrode active material and the binder. The negative electrode active material layer 220 may further include, for example, a coating agent, a dispersant, and the like.

Although not illustrated, a carbon layer for improving adhesion may be further included between the negative electrode active material layer 220 and the solid electrolyte layer 300.

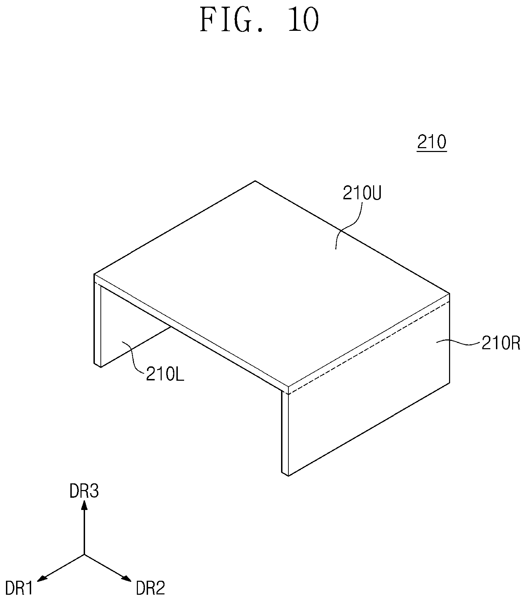

FIG. 10 is a perspective view of the negative electrode current collector 210.

Referring to FIG. 10, a negative electrode current collector 210 according to examples of the present disclosure may be disposed on a negative electrode active material layer 220. For example, the negative electrode current collector 210 may cover the third top part 220U and at least one of the third side parts of the negative electrode active material layer 220. As shown in FIG. 5, 'the third top part 220U' of the negative electrode active material layer 220 and 'the third side parts 220R and 220L that are covered by the negative electrode current collector 210' may be completely, or substantially completely, hidden, and may not be visible from the outside.

The negative electrode current collector 210 may not cover the second exposed surface EXP2 of the negative electrode active material layer 220. The second exposed surface EXP2 may be configured as a structure to reduce or prevent contact between the negative electrode current collector 210 and the positive electrode active material layer 220.

In an example embodiment, the negative electrode current collector 210 may cover the third top part 220U and the third right side part 220R of the negative electrode active material layer 220. In another example embodiment, the negative electrode current collector 210 may cover the third top part 220U, the third right side part 220R, and the third left side part 220L of the negative electrode active material layer 220. In still another example embodiment, the negative electrode current collector 210 may cover the third top part 220U, the third right side part 220R, the third back side part 220B, and the third left side part 220L of the negative electrode active material layer 220.

The negative electrode current collector 210 according to an example embodiment of the present disclosure may include a fourth top part 210U and fourth side parts. The fourth side parts may include a fourth right side 210R and a fourth left side 210L. Parts of the negative electrode current collector 210 are merely a division for convenience of description, and the actual negative electrode current collector 210 may have a three-dimensional structure in which all parts are continuously connected.

The fourth top part 210U may be a part of the negative electrode current collector 210 that covers the third top part 220U of the negative electrode active material layer 220. The fourth top part 210U may have a fourth top width $W_{210U}$, which is the thickness in the second direction DR2, a fourth top breadth $B_{210U}$, which is the thickness in the first direction DR1, and a fourth top depth $D_{210U}$, which is the thickness in the third direction DR3.

The fourth top width $W_{210U}$ of the fourth top part 210U may be greater than the third width $W_{220}$ of the second stack STK2, and the fourth top breadth $B_{210U}$ of the fourth top part 210U may be substantially the same as the third breadth $B_{220}$ of the second stack STK2.

A fourth top depth $D_{210U}$ of the fourth top part 210U may be in a range of about 5 μm to about 30 μm.

The fourth right side part 210R may be a part of the negative electrode current collector 210 that covers the third right side part 220R of the negative electrode active material layer 220. The fourth right side part 210R may have a fourth right side width $W_{210R}$, which is the thickness in the second direction DR2, a fourth right side breadth $B_{210R}$, which is the thickness in the first direction DR1, and a fourth right side depth $D_{210R}$, which is the thickness in the third direction DR3.

The fourth right side breadth $B_{210R}$ of the fourth right side part 210R may be substantially the same as the third breadth $B_{220}$ of the second stack STK2. The fourth right side depth $D_{210R}$ of the fourth right side part 210R may be substantially the same as the third depth $D_{220}$ of the second stack STK2.

The fourth right side width $W_{210R}$ of the fourth right side part 210R may be substantially the same as the fourth top depth $D_{210U}$ of the fourth top part 210U.

The fourth left side part 210L may be a part of the negative electrode current collector 210 that covers the third left side part 220L of the negative electrode active material layer 220. The fourth left side part 210L may have a fourth left side width $W_{210L}$ which is the thickness in the second direction DR2, a fourth left side breadth $B_{210L}$ which is the thickness in the first direction DR1, and a fourth left side depth $D_{210L}$ which is the thickness in the third direction DR3.

The fourth left side breadth $B_{210L}$ of the fourth left side part 210L may be substantially the same as the third breadth $B_{220}$ of the second stack STK2. The fourth left side depth $D_{210L}$ of the fourth left side part 210L may be substantially the same as the third depth $D_{220}$ of the second stack STK2.

The fourth left side width $W_{210L}$ of the fourth left side part 210L may be substantially the same as the fourth top depth $D_{210U}$ of the fourth top part 210U.

The negative electrode current collector 210 may provide an electrical activation function and a structural stabilization function to the all-solid-state battery 10.

The negative electrode current collector 210 may provide an electrical activation function to the all-solid-state battery 10. By covering not only the top surface of the negative electrode active material layer 220, but also at least one additional side part, the contact area between the negative electrode current collector 210 and the negative electrode active material layer 220 may increase. As a result, the electrical flow within the battery 10 may become smoother. In particular, in the case where thickening is applied to the positive electrode active material layer 120 and/or the negative electrode active material layer 220, forming the negative electrode current collector (210) in the direction in which thick-film processing is applied may further facilitate electrical flow.

The negative electrode current collector 210 may provide a structural stabilization function for the all-solid-state battery 10. By covering not only the top surface of the negative electrode active material layer 220 but also at least one additional side part, the second stack STK2 may be supported in an additional direction in addition to the third direction DR3. As a result, the occurrence of cracks due to expansion and contraction during the charging and discharging process of the battery 10 can be reduced or suppressed.

The negative electrode current collector 210 may be applied without limitation as long as the negative electrode current collector 210 is a material that exhibits conductivity without substantially reacting with lithium. The negative electrode current collector 210 may include, for example, at least one of copper (Cu), stainless steel, titanium (Ti), iron (Fe), cobalt (Co), nickel (Ni), or a combination thereof. The negative electrode current collector 210 may be in the form of a plate or foil that partially surrounds and covers the negative electrode active material layer 220.

The all-solid-state battery 10 according to an example embodiment of the present disclosure may further include a lithium metal layer disposed between the negative electrode current collector 210 and the negative electrode active material layer 220.

The lithium metal layer may be or include a metal thin layer including lithium or lithium alloy. As the lithium metal layer is a metal layer including lithium, the lithium metal layer may be configured as, for example, a lithium reservoir. The lithium alloy may be or include, for example, at least one of Li-Al alloy, Li-Sn alloy, Li-In alloy, Li-Ag alloy, Li-Au alloy, Li-Zn alloy, Li-Ge alloy, or Li-Si alloy, but any suitable lithium alloys may be applicable. The lithium metal layer may be formed of or include lithium, one of the alloys, or several types of the alloys. The lithium metal layer may be or include, for example, a plated layer. For example, the lithium metal layer may be plated (or deposited) between the negative electrode active material layer 220 and the negative electrode current collector 210 during charging of the all-solid-state battery 10.

The lithium metal layer may have a second thickness TK2. The second thickness TK2 is not particularly limited, but may be, for example, in a range of about 1 $\mu$m to about 200 $\mu$m, about 1 $\mu$m to about 150 $\mu$m, about 1 $\mu$m to about 100 $\mu$m, or about 1 $\mu$m to about 50 $\mu$m. When the second thickness TK2 of the lithium metal layer is too thin, or lower than the above range, it may be difficult to configure the lithium metal layer as a lithium reservoir. When the second thickness TK2 of the lithium metal layer is excessively or substantially large, or higher than the above range, the mass and volume of the all-solid-state battery 10 increase, and the cycle characteristics of the all-solid-state battery 10 may be deteriorated.

The lithium metal layer may be composed primarily of, or include primarily, lithium (i.e., metallic lithium). During discharge, lithium in the lithium metal layer may ionize and move to the positive electrode layer 100. In other words, lithium may be included as a negative electrode active material in the all-solid-state battery 10. In addition, since the negative electrode active material layer 220 covers the lithium metal layer, the negative electrode active materials layer 220 can protect the lithium metal layer and reduce or suppress the precipitation growth of lithium dendrite. Therefore, the negative electrode active material layer 220 may reduce or prevent short circuits and capacity degradation in the all-solid-state battery 10 while improving the cycle characteristics thereof.

When the lithium metal layer is formed through charging after assembling the all-solid-state battery 10, the negative electrode layer 200, including the negative electrode current collector 210, the negative electrode active material layer 220, and a region therebetween, may be a Li-free region that substantially does not contain lithium (Li) in the initial state, or in a state after complete discharge of the all-solid-state battery 10.

During the charging of the all-solid-state battery 10, the positive electrode active material layer 120, from which lithium ions are released, may decrease in thickness. The thickness of the lithium metal layer may increase by an amount corresponding to the reduction in thickness of the positive electrode active material layer 120. In other words, the thickness of the positive electrode active material layer 120 may decrease in proportion to the formation of the lithium metal layer during charging.

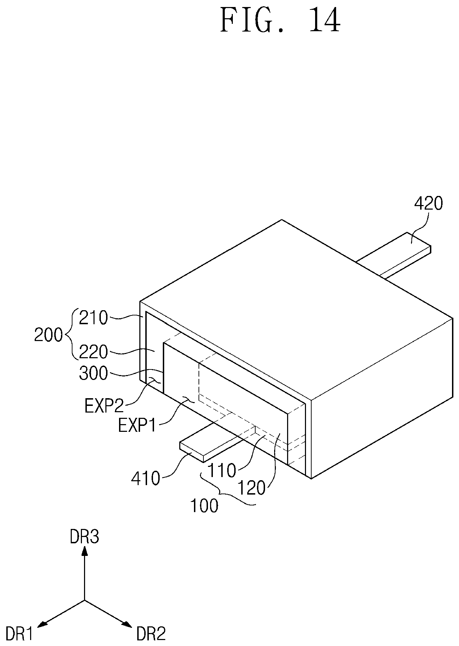

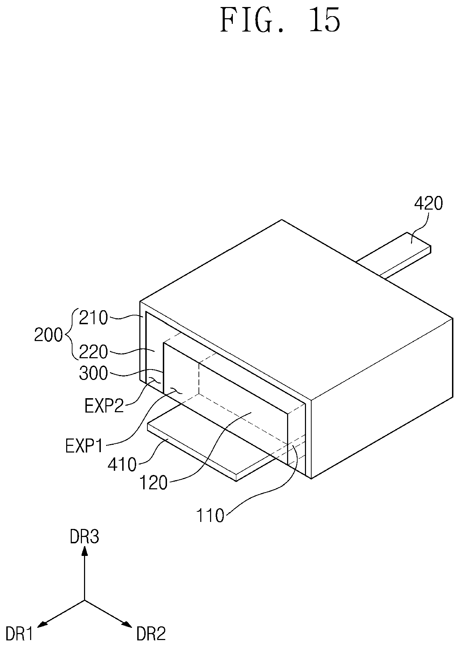

FIGS. 14 and 15 are perspective views of an all-solid-state battery 10 according to an example embodiment of the present disclosure, in which a positive electrode tab and a negative electrode tab are formed.

Referring to FIGS. 14 and 15, the all-solid-state battery 10 according to an example embodiment of the present disclosure may further include a positive electrode tab 410 electrically connected to the positive electrode current collector 110, and a negative electrode tab 420 electrically connected to the negative electrode current collector 210.

The positive electrode tab 410 according to an example embodiment of the present disclosure may protrude in a direction in which the first exposed surface EXP1 and the second exposed surface EXP2 are formed. When the positive electrode tab 410 is formed in a direction other than the direction in which the first exposed surface EXP1 and the second exposed surface EXP2 are formed, the positive electrode tab 410 may come into contact with the negative electrode active material layer 220, causing a short circuit in the battery.

The negative electrode tab 420 according to an example embodiment of the present disclosure may protrude in a direction opposite to the direction of the positive electrode tab 410, that is, in a direction opposite thereto.

The positive electrode tab 410 according to an example embodiment of the present disclosure may be separately prepared, and electrically connected to the positive electrode current collector 110.

In the positive electrode tab 410 according to another example embodiment of the present disclosure, may be formed by extending the positive electrode current collector 110 in the first direction DR1 and exposing the positive electrode current collector 110 externally, as illustrated in FIG. 15. The portion of the positive electrode current collector 110 that is exposed and constitutes the positive electrode tab 410 may be referred to as a non-coated portion.

The positive electrode current collector 110 may be applied without limitation as long as the positive electrode current collector 110 is a material exhibits conductivity without reacting with lithium. The positive electrode current collector 110 may include, for example, at least one of indium (In), copper (Cu), magnesium (Mg), stainless steel, titanium (Ti), iron (Fe), cobalt (Co), nickel (Ni), zinc (Zn), aluminum (Al), germanium (Ge), lithium (Li), or a combination thereof. The positive electrode current collector 110 may have a form of a plate or a foil.

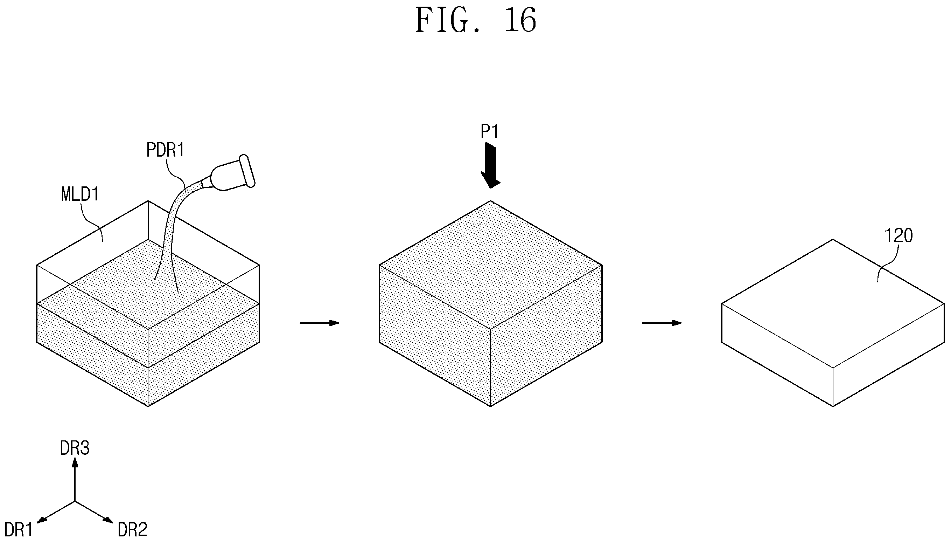

FIGS. 16 to 18 are diagrams for describing a method for manufacturing an all-solid-state battery according to an embodiment of the present disclosure. Hereinafter, a method for manufacturing an all-solid-state battery according to embodiments of the present disclosure is described with reference to FIGS. 16 to 18. Portions overlapping those described above with reference to FIGS. 1 to 15 are omitted, and mainly differences therefrom are described.

Referring to FIGS. 16 to 18, a method of manufacturing an all-solid-state battery according to examples of the present disclosure may include forming a positive electrode active material layer 120 by introducing a positive electrode powder PDR1 into a first mold MLD1 and pressurizing the positive electrode powder PDR1; positioning the positive electrode active material layer 120 inside a second mold MLD2; forming a first stack STK1 by introducing a solid electrolyte powder PDR2 into an empty space of the second mold MLD2 and pressurizing the solid electrolyte powder PDR2; positioning the first stack STK1 inside a third mold MLD3; forming a second stack STK2 by introducing a negative electrode powder PDR3 into an empty space of the third mold MLD3 and pressurizing the negative electrode powder PDR3; and assembling the second stack STK2, a negative electrode current collector 210, and a positive electrode current collector 110.

The positive electrode active material layer 120 may be formed by introducing the positive electrode powder PDR1 into the first mold MLD1 and pressurizing the positive electrode powder PDR1.

Although a substantially rectangular prism is illustrated as the first mold MLD1 in FIG. 16, the shape of the first mold MLD1 may be variously changed according to the shape of the desired positive electrode active material layer 120 as described above.

The positive electrode powder PDR1 may include a composition of the positive electrode active material layer 120. The composition of the positive electrode active material layer 120 is as described above. The positive electrode powder PDR1 may be or include a dry material in the form of a powder that does not contain a solvent.

A first pressing process P1 may be performed on the positive electrode powder PDR1. The first pressing process P1 is not particularly limited, and any method capable of forming a hard structure by applying a force to the positive electrode powder PDR1 can be applied. Examples of the pressurizing device may include a hydraulic press, a mechanical press, an isostatic press, a hot press, a table press, a vibrating press, and a roller press, among other devices.

There is no particular limitation on the force applied during the first pressing process P1, and the force may be sufficient as long as the force is enough to form the positive electrode powder PDR1 into a solid structure. The applied pressure may be variously adjusted according to characteristics of the positive electrode powder PDR1, a desired level of durability of the battery, and the like. For example, when the positive electrode powder is fine, a relatively high pressure may be desired to ensure a uniform density.

The positive electrode active material layer 120 may be positioned inside the second mold MLD2.

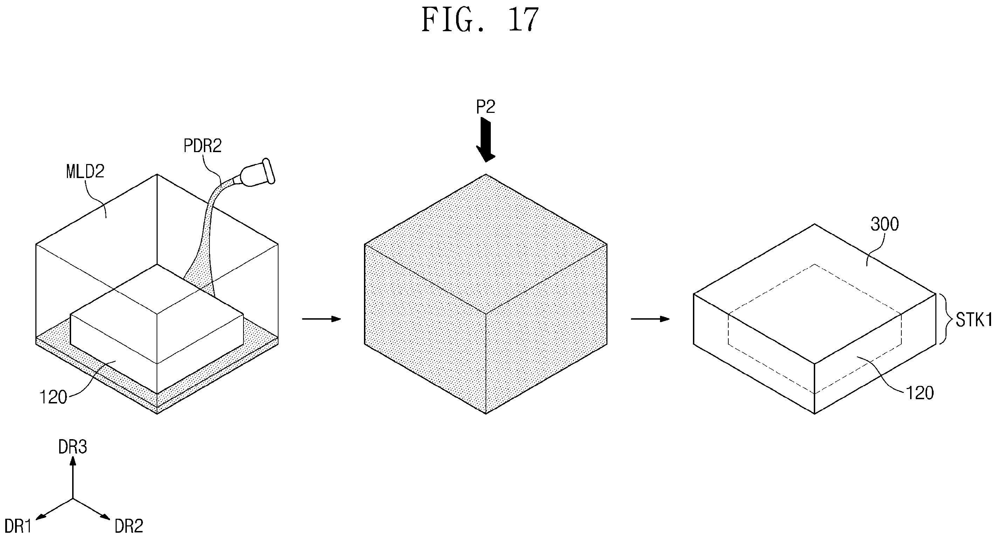

Although a substantially rectangular prism is illustrated as the second mold MLD2 in FIG. 17, the shape of the second mold MLD2 may vary depending on the desired shape of the first stack STK1 as described above.

FIG. 17 illustrates a case where the positive electrode active material layer 120 is positioned at the center of the second mold MLD2. However, the position of the positive electrode active material layer 120 may be changed according to battery design parameters.

The first stack STK1 may be formed by introducing the solid electrolyte powder PDR2 into the empty space of the second mold MLD2 and pressurizing the solid electrolyte powder PDR2. A second pressing process P2 may be performed on the solid electrolyte powder PDR2. The detailed description of the second pressing process P2 may be the same as or similar to the description of the first pressing process P1.

The solid electrolyte powder PDR2 may include a composition of the solid electrolyte layer 300. The composition of the solid electrolyte layer 300 is as described above. The solid electrolyte powder PDR2 may be or include a dry material in the form of a powder that does not include a solvent.

The first stack STK1 may be positioned inside the third mold MLD3.

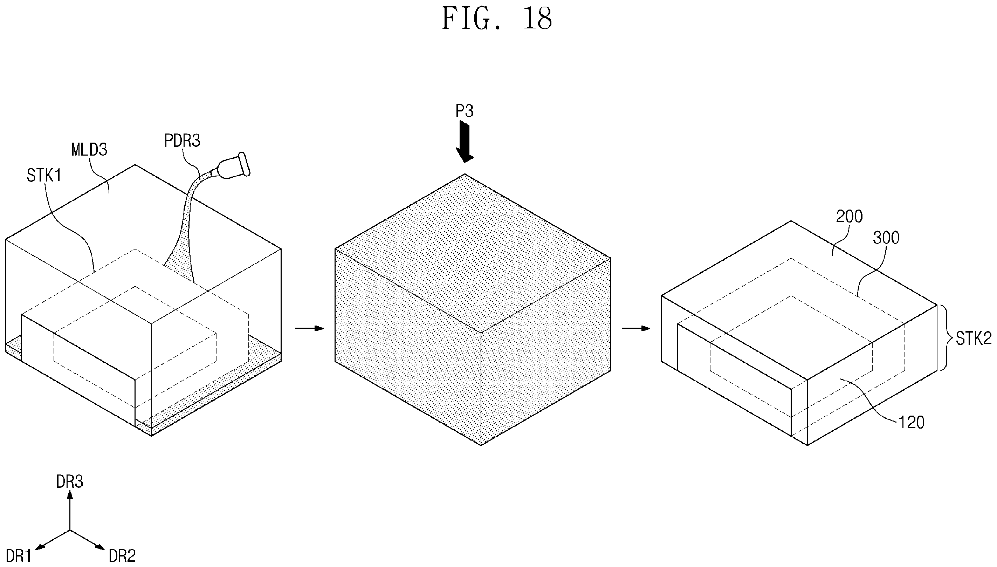

Although a substantially rectangular prism is illustrated as the third mold MLD3 in FIG. 18, the shape of the third mold MLD3 may vary depending on the desired shape of the second stack STK2 as described above.

As illustrated in FIG. 18, the first stack STK1 may be in contact, e.g., in close contact, with one of the surfaces of the third mold MLD3. The adhered surface of the first stack STK1 may be the first exposed surface EXP1 described above.

The second stack STK2 may be formed by introducing the negative electrode powder PDR3 into the empty space of the third mold MLD3 and pressurizing the negative electrode powder PDR3. A third pressing process P3 may be performed on the negative electrode powder PDR3. The detailed description of the third pressing process P3 may be the same as or similar to the description of the first pressing process P1.

The second stack STK2, the negative electrode current collector 210, and the positive electrode current collector 110 may be assembled. Then, the positive electrode current collector 110 and the negative electrode current collector 210 may be assembled to manufacture the all-solid-state battery 10.

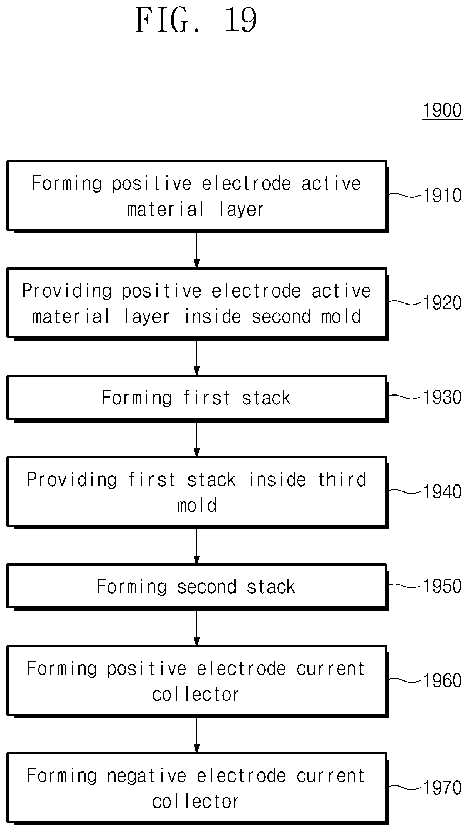

FIG. 19 is a flowchart illustrating a method for manufacturing an all-solid-state battery, according to an example embodiment. In examples, the method 1900 includes operation 1910, which includes forming a positive electrode active material layer by introducing a positive electrode powder into a first mold and pressurizing the positive electrode powder.

Operation 1920 includes providing the positive electrode active material layer inside a second mold. Operation 1930 includes forming a first stack by introducing a solid electrolyte powder into an empty space of the second mold and pressurizing the solid electrolyte powder. Operation 1940 includes providing the first stack inside a third mold. For example, providing the first stack inside the third mold includes positioning the first stack in contact with an inner wall of the third mold. Operation 1950 includes forming a second stack by introducing a negative electrode powder into an empty space of the third mold and pressurizing the negative electrode powder. Operation 1960 includes forming a positive electrode current collector connected to the positive electrode active material layer of the second stack. Operation 1970 includes forming a negative electrode current collector connected to the negative electrode active material layer of the second stack. For example, the negative electrode current collector is assembled to cover a top surface and two side surfaces of the second stack.

An all-solid-state battery according to an example embodiment of the present disclosure can effectively improve ion conductivity by providing a path through which lithium ions can be transferred in multiple directions in the battery.

An all-solid-state battery according to an example embodiment of the present disclosure can maintain desired or improved ionic conductivity even when thickening of a positive electrode active material and/or a negative electrode active material is applied, and thus a battery with improved energy density can be implemented.

While this disclosure has been described in connection with what is presently considered to be example embodiments, it is to be understood that the present disclosure is not limited to the disclosed example embodiments and is intended to cover various modifications and equivalent arrangements included within the spirit and scope of the appended claims, and therefore the aforementioned embodiments should be understood to be examples but not limiting this disclosure in any way.

**Claims**

1. An all-solid-state battery comprising:

   a positive electrode current collector (110);
   a positive electrode active material layer (120) on the positive electrode current collector (110);
   a solid electrolyte layer (300) surrounding the positive electrode active material layer (120), the solid electrolyte layer (300) covering a first top surface (120U) and first side surfaces (120F, 120R, 120B, 120L) of the positive electrode active material layer (120);
   a negative electrode active material layer (220) partially surrounding the solid electrolyte layer (300), the negative electrode active material layer (220) covering a second top part (300U) and second side parts (300F, 300R, 300B, 300L) of the solid electrolyte layer (300), wherein the solid electrolyte layer (300) exposes at least one first exposed surface (EXP1) of the second side parts (300F, 300R, 300B, 300L) to an outside of the all-solid state battery; and
   a negative electrode current collector (210) on the negative electrode active material layer (220).

2. The all-solid-state battery of claim 1,
   wherein the positive electrode active material layer (120) has a rectangular prism shape.

3. The all-solid-state battery according to any of the previous claims,

   wherein the positive electrode active material layer (120) and the solid electrolyte layer (300) form a first stack (STK1), and
   wherein the first stack (STK1) has a rectangular prism shape.

4. The all-solid-state battery according to any of the previous claims,

   wherein the positive electrode active material layer (120), the solid electrolyte layer (300), and the negative electrode active material layer (220) form a second stack (STK2), and
   wherein the second stack (STK2) has a rectangular prism shape.

5. The all-solid-state battery according to any of the previous claims,

   wherein the negative electrode active material layer (220) comprises a third top part (220U) and third side parts (220R, 220B, 220L), and
   wherein the negative electrode current collector (210) covers the third top part (220U) and at least one of the third side parts (220R, 220B, 220L) of the negative electrode active material layer (220).

6.  The all-solid-state battery according to any of the previous claims,

    wherein a stacking direction of the positive electrode active material layer (120), the solid electrolyte layer (300), and the negative electrode active material layer (220) is a third direction (DR3), and
    wherein a thickness of the positive electrode active material layer (120) in the third direction (DR3) is in a range of 100 μm to 3000 μm.

7.  The all-solid-state battery according to any of the previous claims,

    wherein a normal direction of the first exposed surface (EXP1) is a first direction (DR1),
    wherein a stacking direction of the positive electrode active material layer (120), the solid electrolyte layer (300), and the negative electrode active material layer (220) is a third direction (DR3),
    wherein a second direction (DR2) is perpendicular to both the first direction (DR1) and the third direction (DR3), and
    wherein a thickness of the positive electrode active material layer (120) in the second direction (DR2) is in a range of 100 μm to 3000 μm.

8.  The all-solid-state battery according to any of the previous claims,

    wherein a stacking direction of the positive electrode active material layer (120), the solid electrolyte layer (300), and the negative electrode active material layer (220) is a third direction (DR3),
    wherein the negative electrode active material layer (220) comprises a third top part (220U) covering the second top part (300U) of the solid electrolyte layer (300), and
    wherein a thickness of the third top part (220U) in the third direction (DR3) is in a range of 100 μm to 5000 μm.

9.  The all-solid-state battery according to any of the previous claims,

    wherein a stacking direction of the positive electrode active material layer (120), the solid electrolyte layer (300), and the negative electrode active material layer (220) is a third direction (DR3),
    wherein the second side parts (300F, 300R, 300B, 300L) of the solid electrolyte layer (300) comprise a second one side part (300L) and a second other side part (300R) that are opposite to each other in a second direction (DR2),
    wherein the negative electrode active material layer (220) comprises a third top part (220U) covering the second top part (300U) of the solid electrolyte layer (300), a third one side part (220L) covering the second one side part (300L), and a third other side part (220R) covering the second other side part (300R), and
    wherein a thickness of at least one of the third one side part (220L) and the third other side part (220R) in the second direction (DR2) is in a range of 100 μm to 5000 μm.

10. The all-solid-state battery according to any of the previous claims,

    wherein a stacking direction of the positive electrode active material layer (120), the solid electrolyte layer (300), and the negative electrode active material layer (220) is a third direction (DR3), and
    wherein a ratio of the thickness of the second top part (300U) in the third direction (DR3) to a thickness of the positive electrode active material layer (120) in the third direction (DR3) is in a range of 2% to 50%.

11. The all-solid-state battery according to any of claims 8 or 9,
    wherein a ratio of a thickness of the second top part (300U) in the third direction (DR3) to the thickness of the third top part (220U) in the third direction (DR3) is in a range of 5% to 50%.

12. The all-solid-state battery according to any of the previous claims,
    wherein a lithium ion conduction path (RT) between the positive electrode active material layer (120) and the solid electrolyte layer (300) comprises a first path (RTF, RTB) parallel to a first direction (DR1), a second path (RTR, RTL) parallel to a second direction (DR2), and a third path (RTU) parallel to a third direction (DR3).

13. The all-solid-state battery according to any of claims 1 to 11,

    wherein a lithium ion conduction path (RT) between the positive electrode active material layer (120) and the solid electrolyte layer (300) comprises a plurality of first paths (RTF, RTB, RTR, RTL) in different directions, wherein a lithium ion conduction path (RT) between the solid electrolyte layer (300) and the negative electrode active material layer (220) comprises a plurality of second paths (RTB, RTR, RTL) in different directions, and wherein the number of the first paths (RTF, RTB, RTR, RTL) is greater than the number of the second paths (RTB, RTR, RTL).

14. A method for manufacturing an all-solid-state battery, preferably an all-solid-state battery configured according to any of the previous claims, the method comprising:

forming a positive electrode active material layer (120) by introducing a positive electrode powder (PDR1) into a first mold (MLD1) and pressurizing the positive electrode powder (PDR1);
providing the positive electrode active material layer (120) inside a second mold (MLD2);
forming a first stack (STK1) by introducing a solid electrolyte powder (PDR2) into an empty space of the second mold (MLD2) and pressurizing the solid electrolyte powder (PDR2);
providing the first stack (STK1) inside a third mold (MLD3);
forming a second stack (STK2) by introducing a negative electrode powder (PDR3) into an empty space of the third mold (MLD3) and pressurizing the negative electrode powder (PDR3);
forming a positive electrode current collector (110) connected to the positive electrode active material layer (120) of the second stack (STK2); and
forming a negative electrode current collector (210) connected to the negative electrode active material layer (220) of the second stack (STK2).

15. The method of claim 14,
wherein providing the first stack (STK1) inside the third mold (MLD3) comprises positioning the first stack (SKT1) in contact with an inner wall of the third mold (MLD3).

# FIG. 1

# FIG. 2

# FIG. 3

RT

RT

210 }
200
220

300

TK1

120 }
100
110

DR3

DR1 ⊙ → DR2

# FIG. 4

# FIG. 5

# FIG. 6

120

120U

120F

$D_{120}$

$W_{120}$

120R

$B_{120}$

DR3

DR1  DR2

# FIG. 7

120

120D

120L

120B

DR1  DR2

DR3

# FIG. 8

300

300U

$D_{300U}$

$W_{300U}$     $B_{300U}$

300L

$D_{300L}$

300B

$D_{300B}$

$W_{300B}$

$B_{300B}$

$B_{300L}$

$W_{300L}$

$D_{300}$

300F

300R

$D_{300R}$

$D_{300F}$

$W_{300}$     $B_{300}$

$W_{300F}$

$B_{300F}$

$B_{300R}$

$W_{300R}$

DR3

DR1     DR2

# FIG. 9

# FIG. 10

210

210U

210L

210R

DR3

DR1  DR2

# FIG. 11

120U 300U 220U 210U

A

300F
120F

RTF RTU RTB

220R
300R
120R

110

DR3
DR1 DR2

# FIG. 12

FIG. 13

# FIG. 14

# FIG. 15

# FIG. 16

EP 4 773 273 A1

# FIG. 17

EP 4 773 273 A1

FIG. 18

# FIG. 19

1900

Forming positive electrode active material layer ~1910

Providing positive electrode active material layer inside second mold ~1920

Forming first stack ~1930

Providing first stack inside third mold ~1940

Forming second stack ~1950

Forming positive electrode current collector ~1960

Forming negative electrode current collector ~1970

Europäisches
Patentamt

European
Patent Office

Office européen
des brevets

# EUROPEAN SEARCH REPORT

**Application Number**

EP 25 18 5532

## DOCUMENTS CONSIDERED TO BE RELEVANT

| Category | Citation of document with indication, where appropriate, of relevant passages | Relevant to claim | CLASSIFICATION OF THE APPLICATION (IPC) |
|---|---|---|---|
| X | EP 3 817 116 A1 (SAMSUNG ELECTRONICS CO LTD [KR]) 5 May 2021 (2021-05-05) | 1,2,6-11 | INV.<br>H01M10/04 |
| Y | * the whole document * | 14,15 | H01M10/0525 |
| A |  | 3-5,12, 13 | H01M10/0562<br>H01M10/058<br>H01M50/46 |
| | ----- | | |
| Y | JP 2016 213105 A (SEIKO EPSON CORP) 15 December 2016 (2016-12-15) * paragraphs [0130] - [0169]; figures 1,7,8 * | 14,15 | |
| | ----- | | |
| A | US 2022/302462 A1 (MORIOKA KAZUHIRO [JP] ET AL) 22 September 2022 (2022-09-22) * paragraphs [0080] - [0082], [0129]; figures 1-2 * | 1 | |
| | ----- | | |

| | | | TECHNICAL FIELDS SEARCHED (IPC) |
|---|---|---|---|
| | | | H01M |

The present search report has been drawn up for all claims

| Place of search | Date of completion of the search | Examiner |
|---|---|---|
| The Hague | 23 October 2025 | Schmidtbauer, H |

EPO FORM 1503 03.82 (P04C01)

Europäisches
Patentamt

European
Patent Office

Office européen
des brevets

**Application Number**

**EP 25 18 5532**

---

## CLAIMS INCURRING FEES

The present European patent application comprised at the time of filing claims for which payment was due.

☐ Only part of the claims have been paid within the prescribed time limit. The present European search report has been drawn up for those claims for which no payment was due and for those claims for which claims fees have been paid, namely claim(s):

☐ No claims fees have been paid within the prescribed time limit. The present European search report has been drawn up for those claims for which no payment was due.

---

## LACK OF UNITY OF INVENTION

The Search Division considers that the present European patent application does not comply with the requirements of unity of invention and relates to several inventions or groups of inventions, namely:

see sheet B

☐ All further search fees have been paid within the fixed time limit. The present European search report has been drawn up for all claims.

☐ As all searchable claims could be searched without effort justifying an additional fee, the Search Division did not invite payment of any additional fee.

☐ Only part of the further search fees have been paid within the fixed time limit. The present European search report has been drawn up for those parts of the European patent application which relate to the inventions in respect of which search fees have been paid, namely claims:

☒ None of the further search fees have been paid within the fixed time limit. The present European search report has been drawn up for those parts of the European patent application which relate to the invention first mentioned in the claims, namely claims:

2-4(completely); 1, 5-15(partially)

☐ The present supplementary European search report has been drawn up for those parts of the European patent application which relate to the invention first mentioned in the claims (Rule 164 (1) EPC).

Europäisches
Patentamt

European
Patent Office

Office européen
des brevets

**LACK OF UNITY OF INVENTION**
**SHEET B**

Application Number

EP 25 18 5532

The Search Division considers that the present European patent application does not comply with the requirements of unity of invention and relates to several inventions or groups of inventions, namely:

```
1. claims: 2-4(completely); 1, 5-15(partially)

       all-solid-state battery according to claim 1, and different
       aspects of the shape of the components (claims 2-4) or
       conventional aspects relating to thicknesses of the
       components (claims 6-11);
       also partial claims 5 or 12-13, if dependent on claims 3-4;
       also partial method claims 14-15, only for manufacturing an
       an all-solid-state battery configured according to product
       claims 3-4
                              ---


2. claims: 1, 5-15(all partially)

       claim 5: the negative electrode current collector covers the
       third top part and at least one of the third side parts of
       the negative electrode active material layer;
       also partial claims 6-13, if dependent on claim 5;
       also partial method claims 14-15, only for manufacturing an
       an all-solid-state battery configured according to product
       claim 5
                              ---


3. claims: 1, 12-15(all partially)

       claim 12 or 13: specific lithium ion conduction paths;
       also partial method claims 14-15, only for manufacturing an
       an all-solid-state battery configured according to product
       claim 12 or 13
                              ---


4. claims: 14, 15(partially)

       method claims 14-15, if not for manufacturing an an
       all-solid-state battery configured according to product
       claim 1-13
                              ---
```

## ANNEX TO THE EUROPEAN SEARCH REPORT
## ON EUROPEAN PATENT APPLICATION NO.

EP 25 18 5532

This annex lists the patent family members relating to the patent documents cited in the above-mentioned European search report.
The members are as contained in the European Patent Office EDP file on
The European Patent Office is in no way liable for these particulars which are merely given for the purpose of information.

23-10-2025

| Patent document cited in search report | | Publication date | Patent family member(s) | | Publication date |
|---|---|---|---|---|---|
| EP 3817116 | A1 | 05-05-2021 | CN | 112736281 A | 30-04-2021 |
| | | | EP | 3817116 A1 | 05-05-2021 |
| | | | KR | 20210050322 A | 07-05-2021 |
| | | | US | 2021126283 A1 | 29-04-2021 |
| JP 2016213105 | A | 15-12-2016 | NONE | | |
| US 2022302462 | A1 | 22-09-2022 | CN | 114830372 A | 29-07-2022 |
| | | | EP | 4084115 A1 | 02-11-2022 |
| | | | JP | 7588327 B2 | 22-11-2024 |
| | | | JP | WO2021131094 A1 | 01-07-2021 |
| | | | US | 2022302462 A1 | 22-09-2022 |
| | | | WO | 2021131094 A1 | 01-07-2021 |

EPO FORM P0459

For more details about this annex : see Official Journal of the European Patent Office, No. 12/82

**EP 4 773 273 A1**

## REFERENCES CITED IN THE DESCRIPTION

**Patent documents cited in the description**

- KR 1020250001529